(19) **Europäisches Patentamt**
**European Patent Office**
**Office européen des brevets**

(11) **EP 4 557 773 A1**

(12) **EUROPEAN PATENT APPLICATION**
published in accordance with Art. 153(4) EPC

(43) Date of publication:
**21.05.2025 Bulletin 2025/21**

(21) Application number: **23839561.0**

(22) Date of filing: **06.07.2023**

(51) International Patent Classification (IPC):
**H04S 7/00** *(2006.01)*    **H04R 3/00** *(2006.01)*

(52) Cooperative Patent Classification (CPC):
**H04R 3/00; H04S 7/00**

(86) International application number:
**PCT/JP2023/025118**

(87) International publication number:
**WO 2024/014389 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.07.2022 US 202263388740 P**
**19.10.2022 US 202263417397 P**
**06.04.2023 US 202363457495 P**

(71) Applicant: **Panasonic Intellectual Property Corporation of America**
**Torrance, CA 90504 (US)**

(72) Inventors:
• **USAMI, Hikaru**
**Kadoma-shi, Osaka 571-0057 (JP)**
• **ISHIKAWA, Tomokazu**
**Kadoma-shi, Osaka 571-0057 (JP)**
• **ENOMOTO, Seigo**
**Kadoma-shi, Osaka 571-0057 (JP)**
• **NAKAHASHI, Kota**
**Kadoma-shi, Osaka 571-0057 (JP)**
• **EHARA, Hiroyuki**
**Kadoma-shi, Osaka 571-0057 (JP)**
• **YAMADA, Mariko**
**Kadoma-shi, Osaka 571-0057 (JP)**
• **MIYASAKA, Shuji**
**Neyagawa-shi, Osaka 572-0004 (JP)**

(74) Representative: **Novagraaf International SA**
**Chemin de l'Echo 3**
**1213 Onex, Geneva (CH)**

(54) **ACOUSTIC SIGNAL PROCESSING METHOD, COMPUTER PROGRAM, AND ACOUSTIC SIGNAL PROCESSING DEVICE**

(57)    An acoustic signal processing method includes: obtaining first position information indicating a position of an object that is a moving object in a virtual space, and second position information indicating a position of a listener in the virtual space; calculating a moving speed of the object based on the first position information obtained; calculating a distance between the object and the listener based on the first position information obtained and the second position information obtained; generating, based on the moving speed calculated and the distance calculated, an aerodynamic sound signal indicating an aerodynamic sound generated when wind caused by movement of the object reaches an ear of the listener; and outputting the aerodynamic sound signal generated.

**EP 4 557 773 A1**

# FIG. 4

```
                         START

                                                        S10
   ┌──────────────────────────────────────────────┐
   │ Obtain first position information indicating   │
   │ position of object, second position            │
   │ information indicating position of listener,   │
   │ and flag information indicating whether         │
   │ object generates aerodynamic sound             │
   └──────────────────────────────────────────────┘

                                                        S20
   ┌──────────────────────────────────────────────┐
   │ Calculate moving speed of object in virtual    │
   │ space based on first position information       │
   └──────────────────────────────────────────────┘

                                                        S30
   ┌──────────────────────────────────────────────┐
   │ Calculate distance between object and listener │
   │ based on first position information and second  │
   │ position information                            │
   └──────────────────────────────────────────────┘

                                                        S40
                                                              No
   ⟨ Flag information indicates that object  ⟩────────────┐
     generates aerodynamic sound?                         │
                      │ Yes                    S50         │
   ┌──────────────────────────────────────────────┐       │
   │ Generate aerodynamic sound signal              │       │
   └──────────────────────────────────────────────┘       │
                                               S60         │
   ┌──────────────────────────────────────────────┐       │
   │ Output aerodynamic sound signal                │       │
   └──────────────────────────────────────────────┘       │
                      │◄──────────────────────────────────┘

                         END
```

**Description**

[Technical Field]

The present disclosure relates to an acoustic signal processing method, etc.

[Background Art]

Patent Literature (PTL) 1 discloses a technique related to a three-dimensional sound field space reproduction device that is an acoustic signal processing device. This acoustic signal processing device includes a Doppler calculation means that performs Doppler effect processing on a convolved acoustic signal, based on the moving speed of a listener and the moving speed of a sound source.

[Citation List]

[Patent Literature]

[PTL 1] Japanese Unexamined Patent Application Publication No. H07-312800
[PTL 2] International Patent Application Publication No. 2021/180938

[Summary of Invention]

[Technical Problem]

With the technique disclosed in PTL 1, it may be difficult to provide a sense of realism to the listener.
In view of this, the present disclosure has an object to provide, for instance, an acoustic signal processing method capable of providing a listener with a sense of realism.

[Solution to Problem]

An acoustic signal processing method according to one aspect of the present disclosure includes: obtaining first position information indicating a position of an object that is a moving object in a virtual space, and second position information indicating a position of a listener in the virtual space; calculating a moving speed of the object based on the first position information obtained; calculating a distance between the object and the listener based on the first position information obtained and the second position information obtained; generating, based on the moving speed calculated and the distance calculated, an aerodynamic sound signal indicating an aerodynamic sound generated when wind caused by movement of the object reaches an ear of the listener; and outputting the aerodynamic sound signal generated.

An acoustic signal processing method according to one aspect of the present disclosure includes: processing a noise signal with each of a plurality of band-emphasis filters to generate a plurality of processed noise signals, and synthesizing the plurality of processed noise signals to generate an aerodynamic sound signal indicating an aerodynamic sound generated when wind reaches an ear of a listener in a virtual space; and outputting the aerodynamic sound signal generated. Each of the plurality of band-emphasis filters is a filter for simulating the aerodynamic sound caused by a shape of the ear or a head of the listener.
A computer program according to one aspect of the present disclosure is for causing a computer to execute the above acoustic signal processing method.
An acoustic signal processing device according to one aspect of the present disclosure includes: an obtainer that obtains first position information indicating a position of an object that is a moving object in a virtual space, and second position information indicating a position of a listener in the virtual space; a first calculator that calculates a moving speed of the object based on the first position information obtained; a second calculator that calculates a distance between the object and the listener based on the first position information obtained and the second position information obtained; a generator that generates, based on the moving speed calculated and the distance calculated, an aerodynamic sound signal indicating an aerodynamic sound generated when wind caused by movement of the object reaches an ear of the listener; and an outputter that outputs the aerodynamic sound signal generated.
Note that these general or specific aspects may be implemented using a system, a device, a method, an integrated circuit, a computer program, or a non-transitory computer-readable recording medium such as a CD-ROM, or any combination thereof.

[Advantageous Effects of Invention]

An acoustic signal processing method according to one aspect of the present disclosure is capable of providing a listener with a sense of realism.

[Brief Description of Drawings]

[FIG. 1]

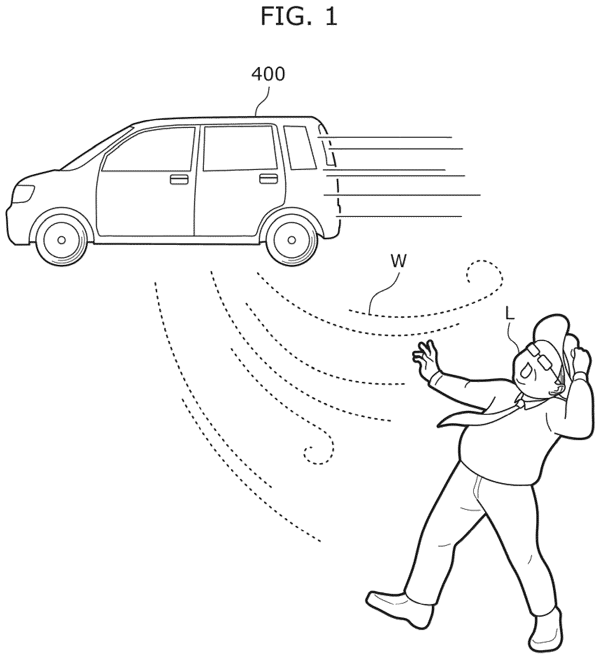

FIG. 1 is one example of a diagram for explaining aerodynamic sound that is generated upon reaching the head or ears of a listener.
[FIG. 2A]

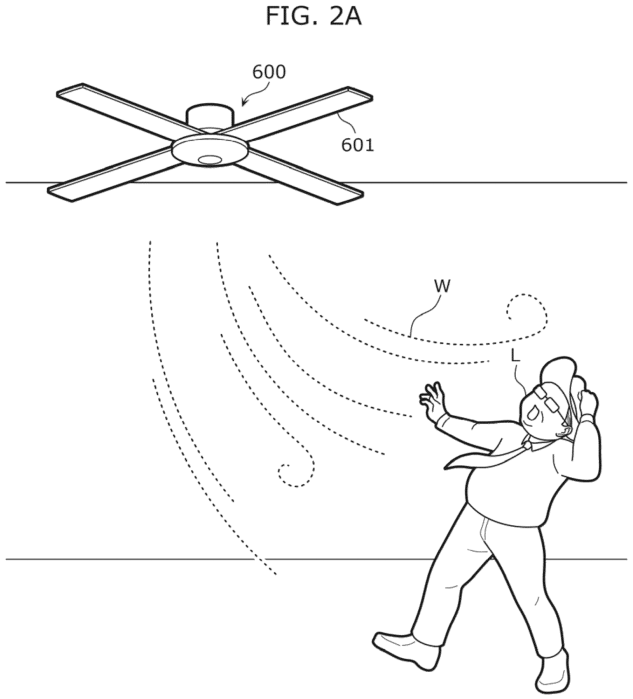

FIG. 2A is another example of a diagram for explaining aerodynamic sound that is generated upon reaching the head or ears of a listener.
[FIG. 2B]

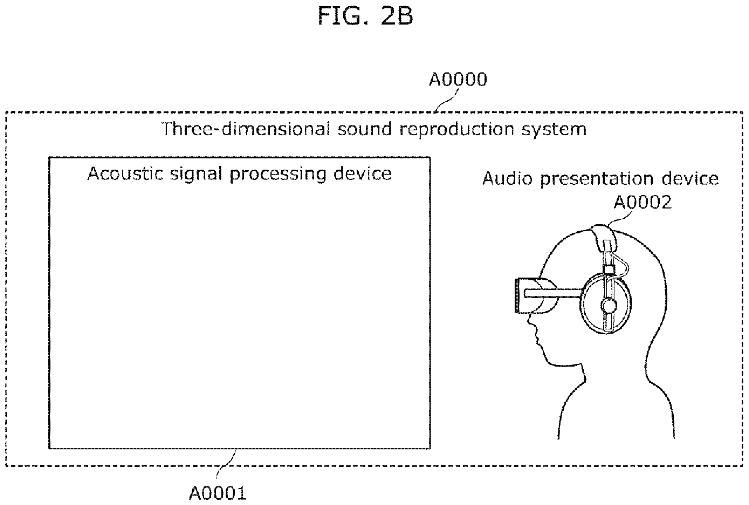

FIG. 2B illustrates a three-dimensional sound (immersive audio) reproduction system as one example of a system to which acoustic processing or decoding processing according to the present disclosure is applicable.

[FIG. 2C]

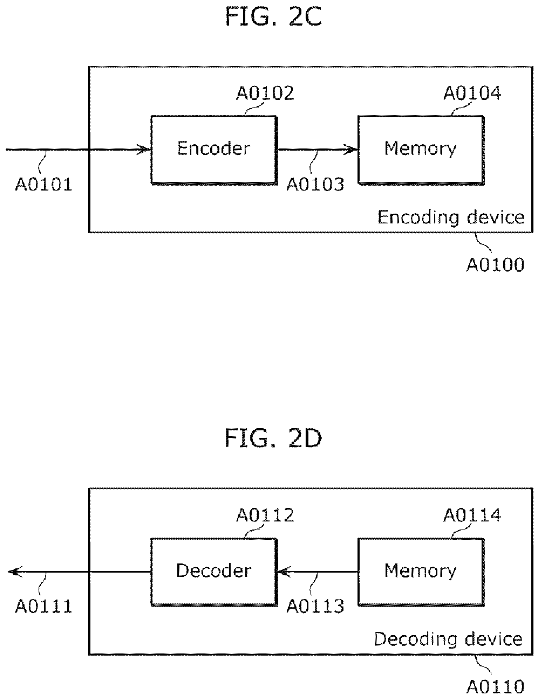

FIG. 2C is a functional block diagram illustrating the configuration of one example of an encoding device of the present disclosure.

[FIG. 2D]
FIG. 2D is a functional block diagram illustrating the configuration of one example of a decoding device of the present disclosure.

[FIG. 2E]

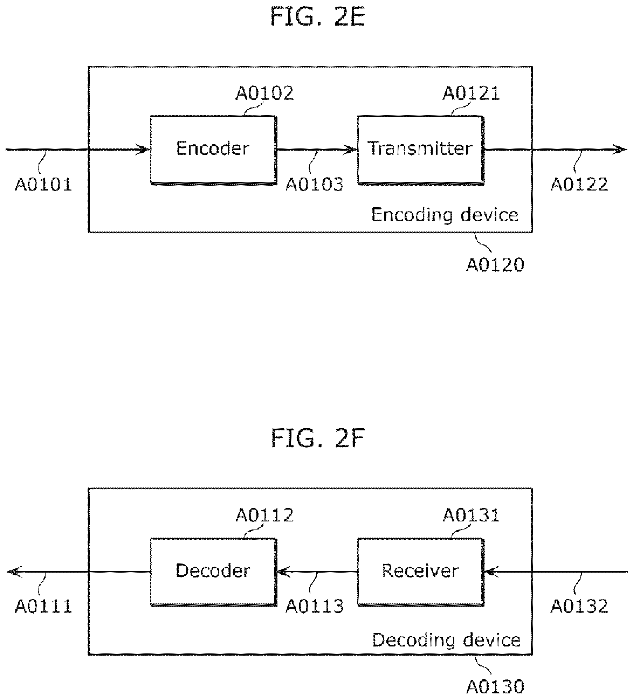

FIG. 2E is a functional block diagram illustrating the configuration of another example of an encoding device of the present disclosure.

[FIG. 2F]
FIG. 2F is a functional block diagram illustrating the configuration of another example of a decoding device of the present disclosure.

[FIG. 2G]

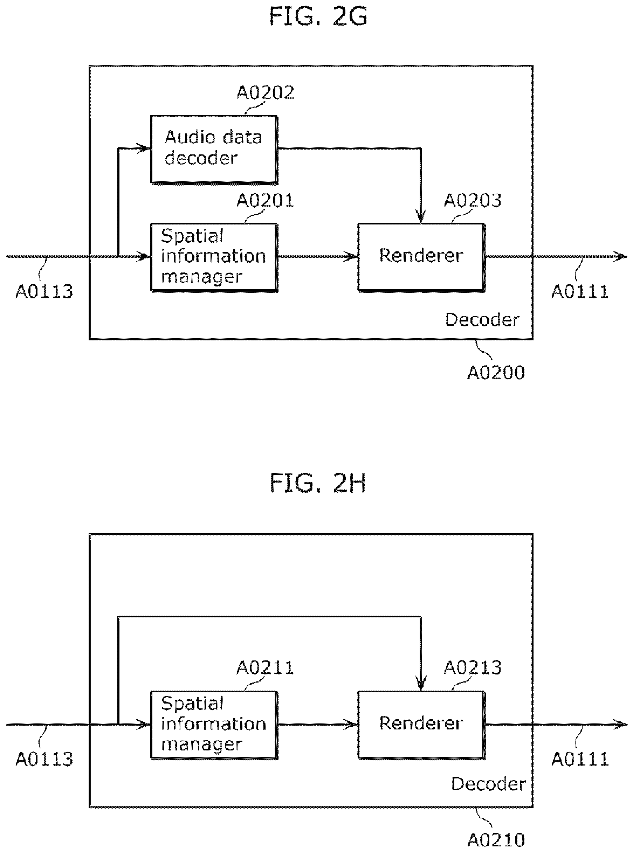

FIG. 2G is a functional block diagram illustrating the configuration of one example of the decoder in FIG. 2D or FIG. 2F.

[FIG. 2H]
FIG. 2H is a functional block diagram illustrating the configuration of another example of the decoder in FIG. 2D or FIG. 2F.

[FIG. 2I]

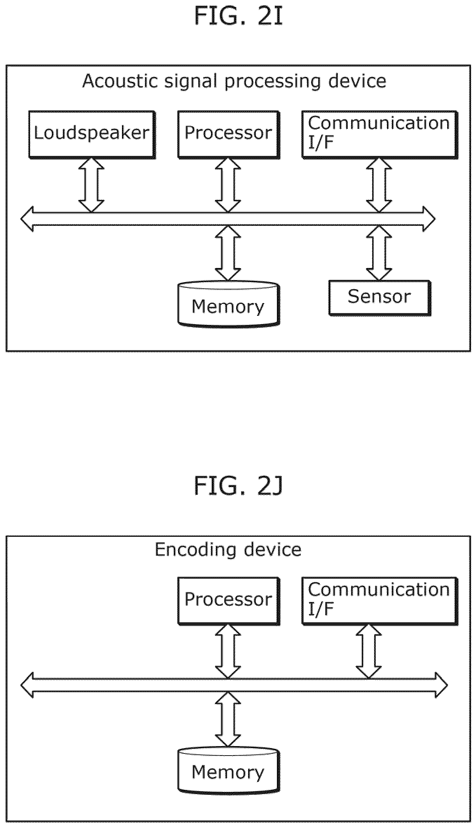

FIG. 2I illustrates one example of a physical configuration of an acoustic signal processing device.

[FIG. 2J]
FIG. 2J illustrates one example of a physical configuration of an encoding device.

[FIG. 3A]

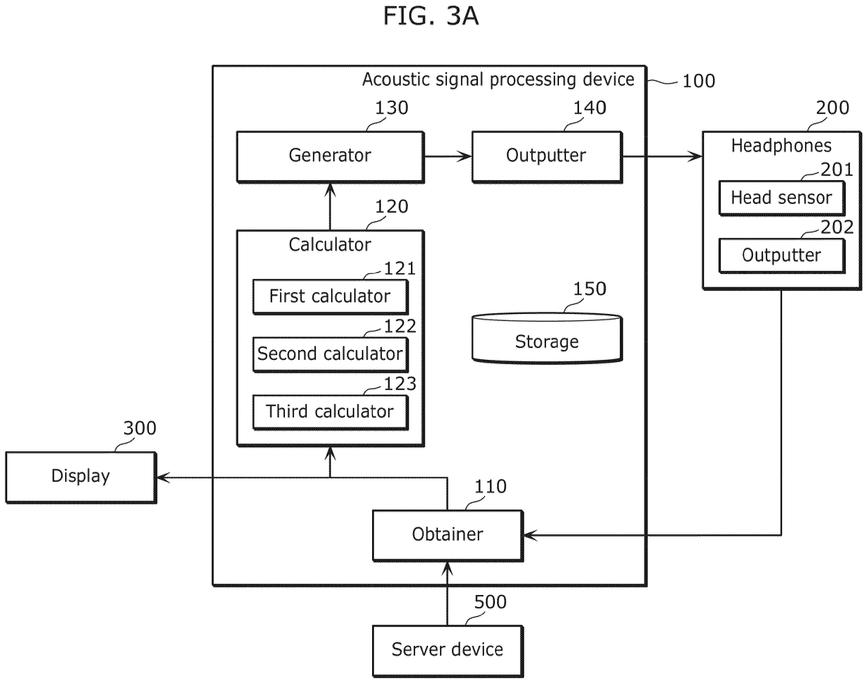

FIG. 3A is a block diagram illustrating a functional configuration of an acoustic signal processing device according to an embodiment of the present disclosure.

[FIG. 3B]

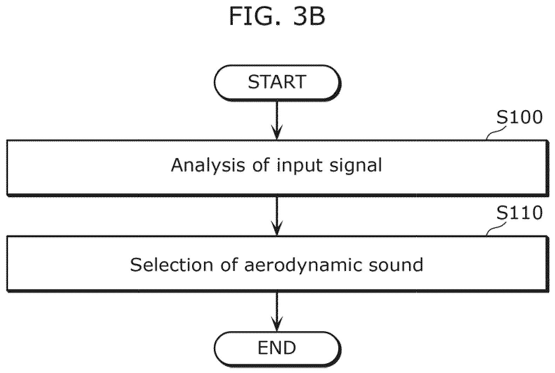

FIG. 3B is a flowchart of an operation example performed by a selector according to an embodiment of the present disclosure.

[FIG. 4]

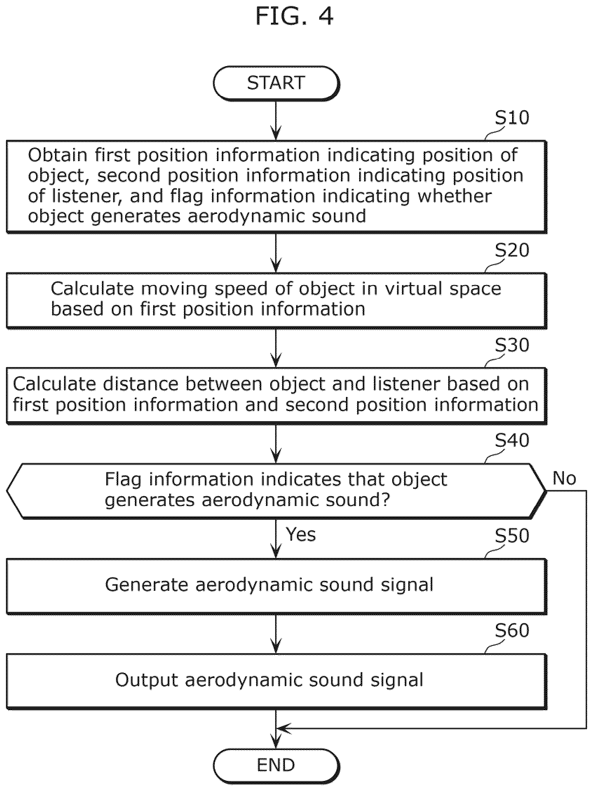

FIG. 4 is a flowchart of Operation Example 1 performed by an acoustic signal processing device according to an embodiment of the present disclosure.

[FIG. 5]

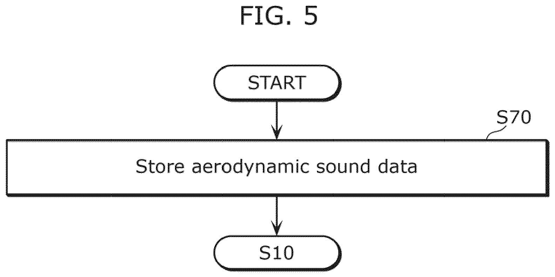

FIG. 5 is a flowchart illustrating a first example of a method for a generator to generate the aerodynamic sound signal in step S50 illustrated in FIG. 4.

[FIG. 6]

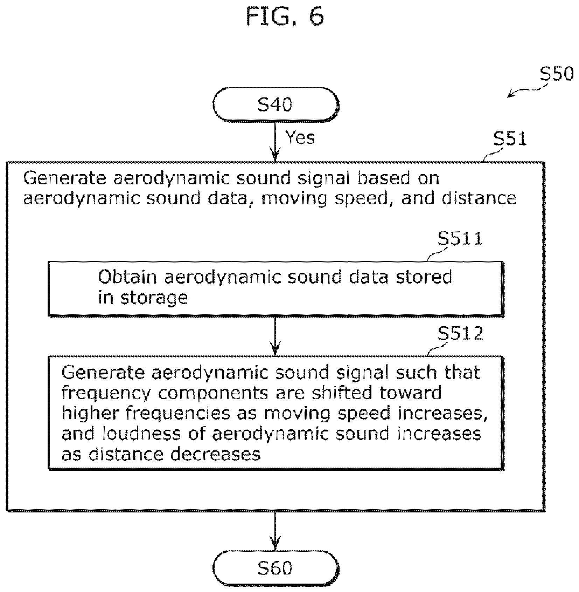

FIG. 6 is a flowchart illustrating a first example of a method for a generator to generate the aerodynamic sound signal in step S50 illustrated in FIG. 4.

[FIG. 7]

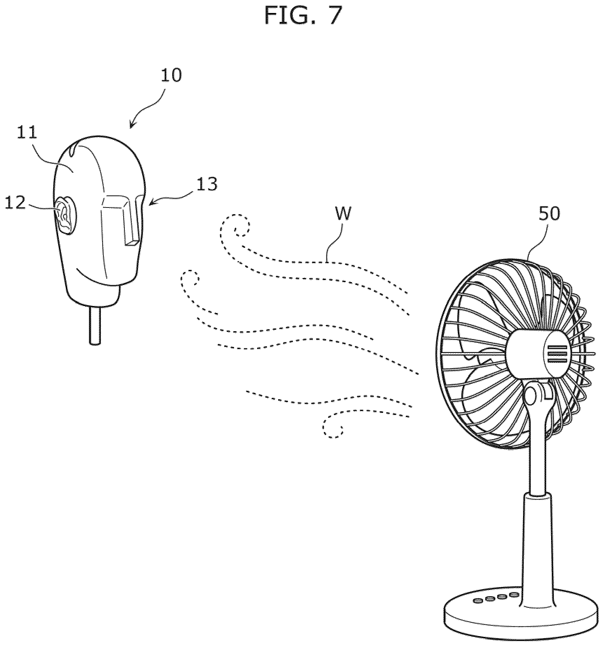

FIG. 7 is a schematic diagram illustrating a dummy head microphone for recording aerodynamic sound data according to a first example of the method in Operation Example 1.

[FIG. 8]

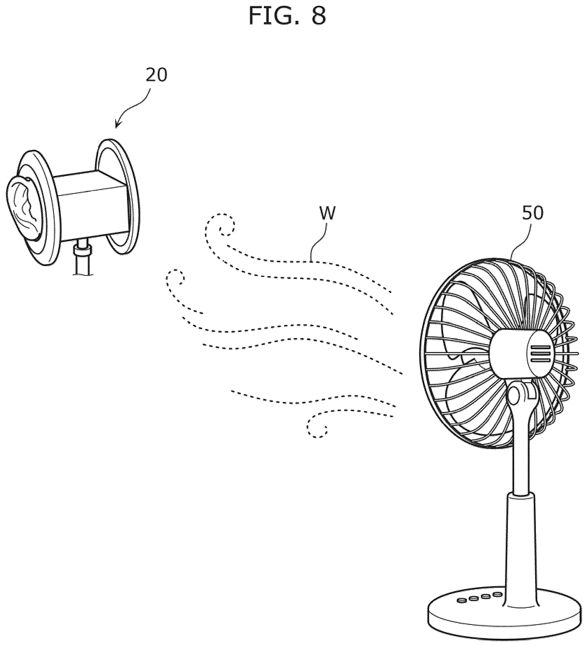

FIG. 8 is a schematic diagram illustrating another dummy head microphone for recording aerodynamic sound data according to the first example of the method in Operation Example 1.

[FIG. 9]

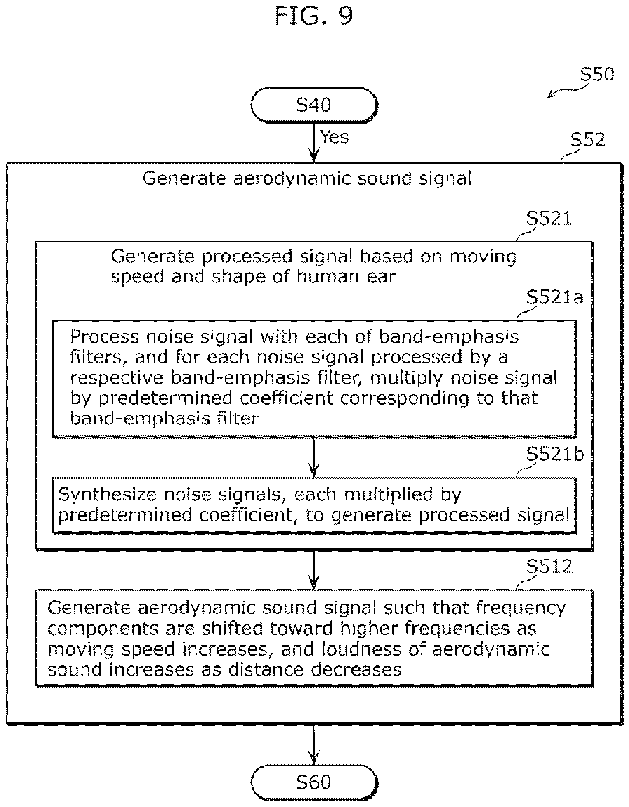

FIG. 9 is a flowchart illustrating a second example of a method for a generator to generate the aerodynamic sound signal in step S50 illustrated in FIG. 4.

[FIG. 10A]

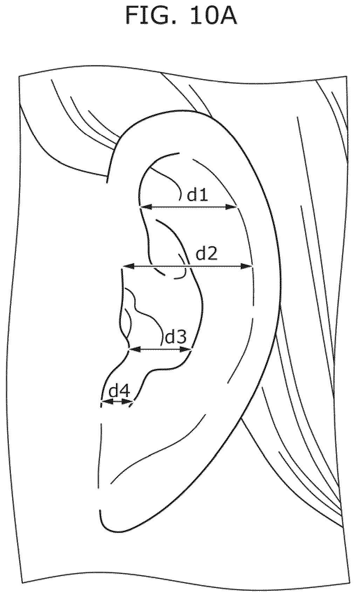

FIG. 10A illustrates the process of generating the aerodynamic sound signal using a generator according to a second example of the method in Operation Example 1.

[FIG. 10B]

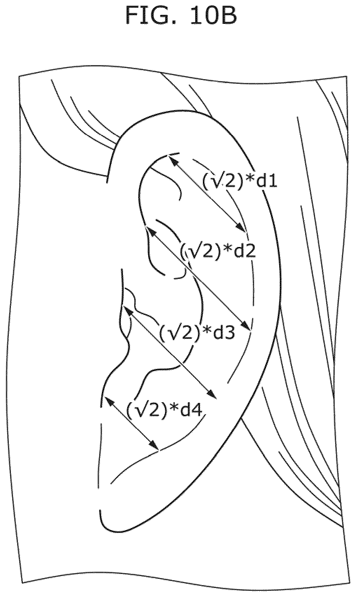

FIG. 10B is another figure illustrating the process of generating the aerodynamic sound signal using the generator according to the second example of the method in Operation Example 1.

[FIG. 11]

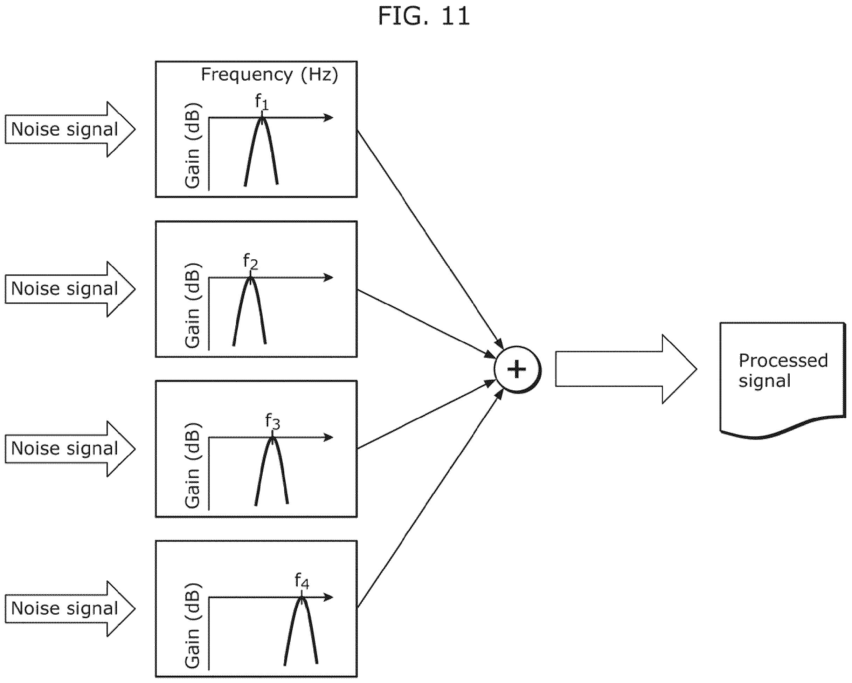

FIG. 11 illustrates one example of four band pass filters and their processing according to the second example of the method in Operation Example 1.

[FIG. 12]

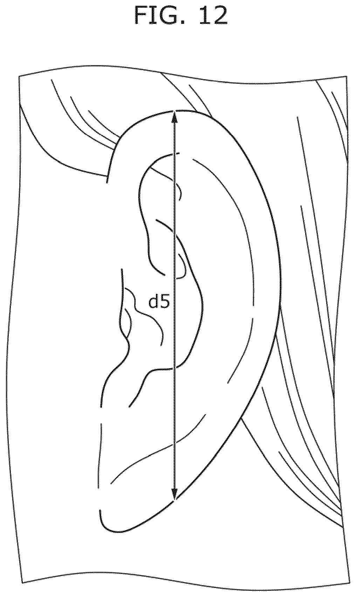

FIG. 12 is another figure illustrating the process of generating the processed signal using the generator according to the second example of the method in Operation Example 1.

[FIG. 13]

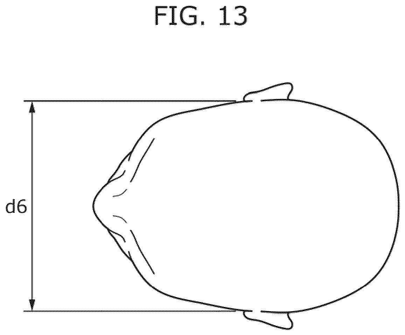

FIG. 13 is another figure illustrating the process of generating the processed signal using the generator according to the second example of the method in Operation Example 1.

[FIG. 14]

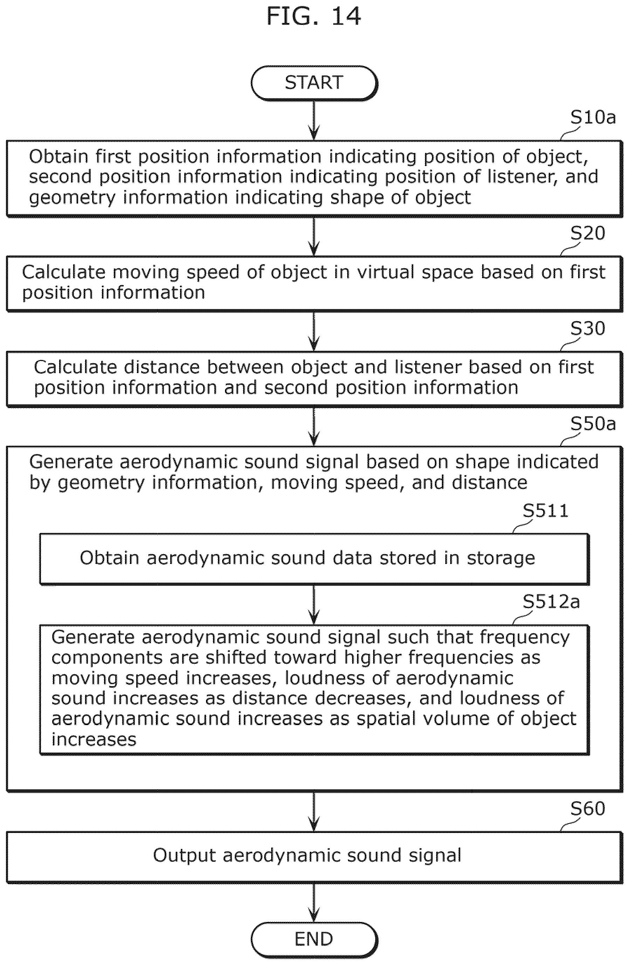

FIG. 14 is a flowchart of Operation Example 2 performed by an acoustic signal processing device according to an embodiment of the present disclosure.

[FIG. 15]

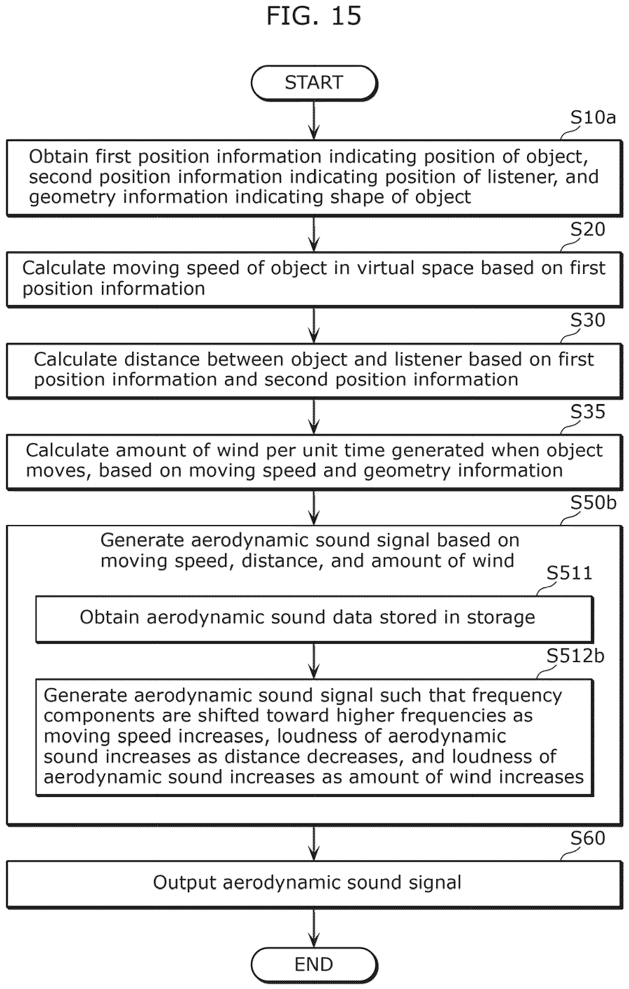

FIG. 15 is a flowchart of Operation Example 3 performed by an acoustic signal processing device according to an embodiment of the present disclosure.

[FIG. 16]

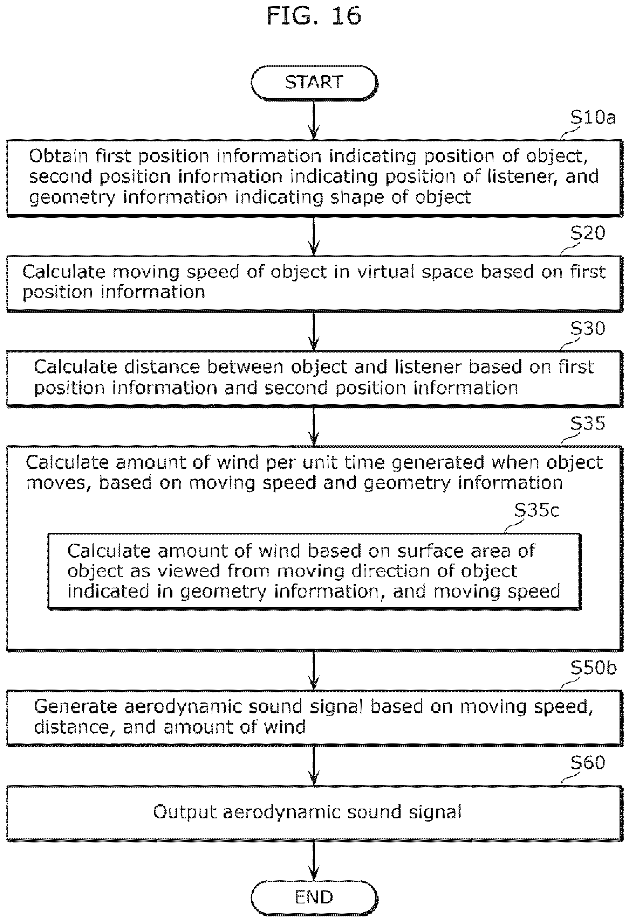

FIG. 16 is a flowchart of Operation Example 4 performed by an acoustic signal processing device according to an embodiment of the present disclosure.

[FIG. 17]

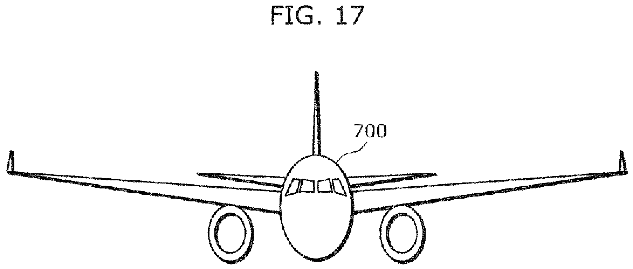

FIG. 17 illustrates aircraft, which is an object related to Operation Example 4 performed by an acoustic signal processing device according to an embodiment of the present disclosure.

[FIG. 18]

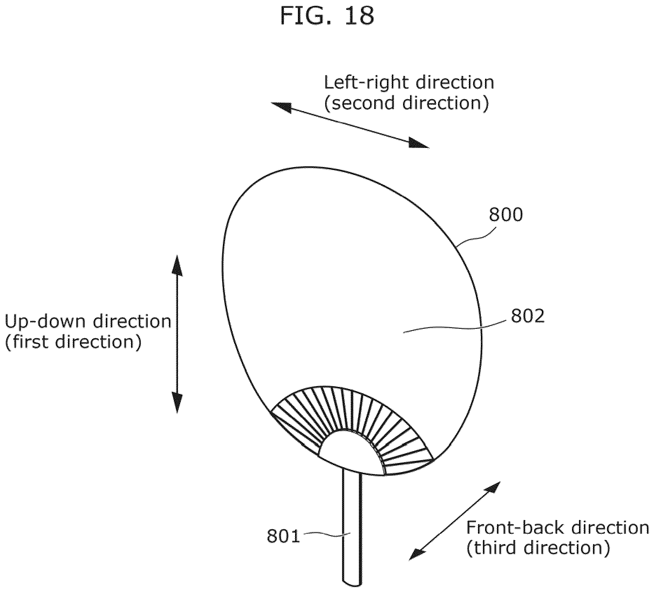

FIG. 18 illustrates a fan, which is an object related to Operation Example 5 performed by an acoustic signal processing device according to an embodiment of the present disclosure.

[FIG. 19]

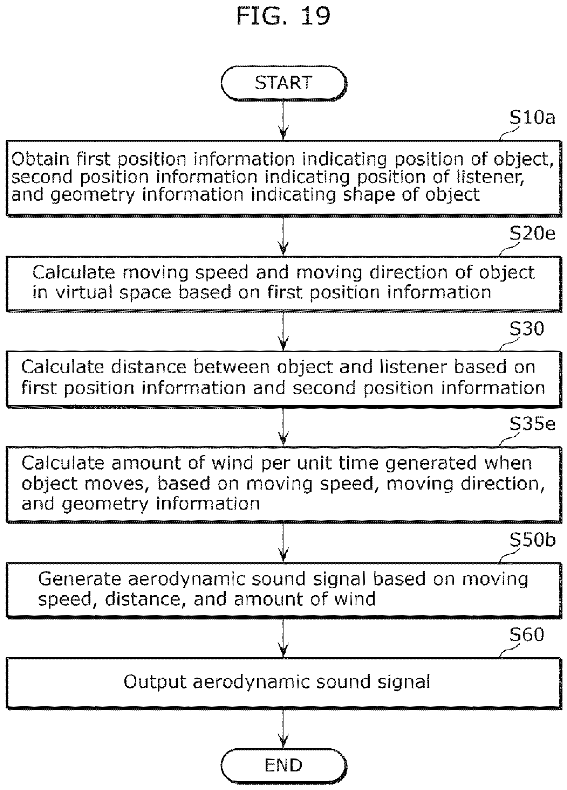

FIG. 19 is a flowchart of Operation Example 5 performed by an acoustic signal processing device according to an embodiment of the present disclosure.
[FIG. 20]

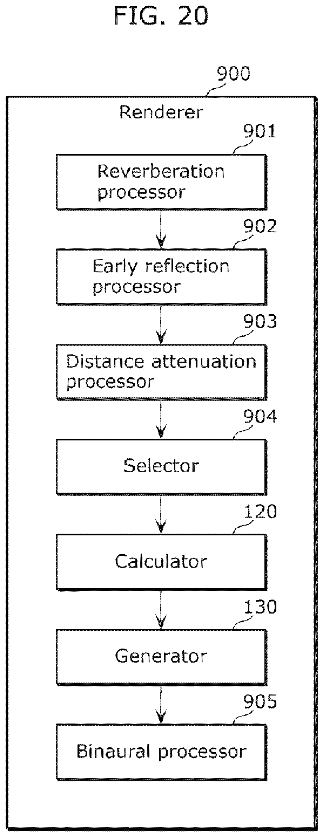

FIG. 20 illustrates one example of a functional block diagram and steps for explaining a case where the renderers of FIG. 2G and FIG. 2H perform pipeline processing.

[Description of Embodiments]

Underlying Knowledge Forming Basis of the Present Disclosure

Acoustic signal processing devices that process acoustic signals (i.e., sound signals) to exhibit the Doppler effect in a virtual space are known.

PTL 1 discloses a technique related to a three-dimensional sound field space reproduction device that is an acoustic signal processing device. This acoustic signal processing device includes a Doppler calculation means that performs Doppler effect processing on a convolved acoustic signal, based on the moving speed of a listener and the moving speed of a sound source that emits a sound (i.e., an object that emits a sound). This allows the listener to recognize that an object emitting sound (for example, an ambulance emitting a siren) is moving by listening to the sound applied with Doppler effect processing.

Although not disclosed in PTL 1, even for objects that do not emit sound, if wind noise is generated due to the movement of the object, the listener will hear this wind noise. This allows the listener to more strongly recognize that the object is moving. For example, when the object is a bat used in baseball, and this object (the bat) moves (changes position), that is, when the bat is swung, wind noise is generated. The listener can recognize that the bat has been swung by hearing this wind noise.

Such sounds applied with Doppler effect processing and wind noise are utilized in applications for reproducing stereophonic sound in a space where a user is present, such as virtual reality (VR) or augmented reality (AR) space.

Here, we consider an object that does not emit sound and is not moving fast enough to generate wind noise.

Even such an object may generate wind by moving through the air, and this wind may reach the listener. In this case, when the wind reaches, for example, the head or ears of the listener, aerodynamic sound is generated. Aerodynamic sound is a sound that is generated when wind reaches the ears of the listener in the virtual space, and is also a sound that is caused by the shape of the listener's ears or head. The listener perceives that the object is moving by hearing the aerodynamic sound. This example will be described with reference to FIG. 1 and FIG. 2A.

FIG. 1 is one example of a diagram for explaining aerodynamic sound that is generated upon reaching the head or ears of listener L. Vehicle 400 illustrated in FIG. 1 does not emit sounds such as a siren, for example, and is not moving at a high enough speed to generate wind noise.

Even such a vehicle 400, by moving, causes wind W. When this wind W reaches listener L, aerodynamic sound is generated according to, for example, the shape of the ears of listener L, and listener L ends up hearing this aerodynamic sound. Therefore, listener L can audibly perceive that vehicle 400 is moving.

FIG. 2A is another example of a diagram for explaining aerodynamic sound that is generated upon reaching the head or ears of listener L. FIG. 2A illustrates electric fan 600 including a plurality of large blades 601, and blades 601 are rotating.

Even in a case where these blades 601 are rotating but not rotating fast enough to generate wind noise, wind W occurs. When this wind W reaches listener L, aerodynamic sound is generated according to, for example, the shape of the ears of listener L, and listener L ends up hearing this aerodynamic sound. Therefore, listener L can audibly perceive that blades 601 are rotating (moving).

By means of such aerodynamic sound, if listener L can perceive that the object (vehicle 400 or blades 601) is moving, listener L can experience a greater sense of realism.

Thus, it is not clear that the aerodynamic sound generated when the above-mentioned wind W reaches the head or ears of listener L is output to listener L in the technique disclosed in PTL 1. Stated differently, it may be difficult to provide a sense of realism to listener L with a conventional technique (the technique disclosed in PTL 1) incapable of outputting such aerodynamic sound.

Consequently, there has been a demand for an acoustic signal processing method and the like capable of providing listener L with a sense of realism.

An acoustic signal processing method according to a first aspect of the present disclosure includes: obtaining first position information indicating a position of an object that is a moving object in a virtual space, and second position information indicating a position of a listener in the virtual space; calculating a moving speed of the object based on the first position information obtained; calculating a distance between the object and the listener based on the first position information obtained and the second position information obtained; generating, based on the moving speed calculated and the distance calculated, an aerodynamic sound signal indicating an aerodynamic sound generated when wind caused by movement of the object reaches an ear of the listener; and outputting the aerodynamic sound signal generated.

Accordingly, the acoustic signal processing method can generate an aerodynamic sound signal indicating an aerodynamic sound generated when wind caused by movement of the object reaches an ear of the listener, based on the position of the object in the virtual space and the position of the listener, and output the generated aerodynamic sound signal. This aerodynamic sound signal, for example, is output to headphones, a loudspeaker, or any other suitable audio device, allowing the listener to listen to the aerodynamic sound. Therefore, the listener can perceive that the object is moving and experience a sense of realism. That is, the acoustic signal processing method according to one aspect of the present disclosure is capable of providing the listener with a sense of realism.

For example, an acoustic signal processing method according to a second aspect of the present disclosure is the acoustic signal processing method according to the first aspect, wherein in the generating, the aerodynamic sound signal is generated such that: frequency components are shifted toward higher frequencies as the moving speed calculated increases; and a loudness of the aerodynamic sound increases as the distance calculated decreases.

Accordingly, the aerodynamic sound that the listener hears can be controlled based on the moving speed of the object and the distance between the object and the listener, allowing the listener to experience a greater sense of realism. That is, the acoustic signal processing method is capable of providing the listener with a greater sense of realism.

For example, an acoustic signal processing method according to a third aspect of the present disclosure is the acoustic signal processing method according to the first or second aspect, wherein the obtaining includes obtaining flag information indicating whether the object generates the aerodynamic sound, and in the generating, the aerodynamic sound signal is generated on condition that the flag information obtained indicates that the object generates the aerodynamic sound.

Accordingly, the aerodynamic sound signal is generated only when the flag information indicates that the object generates the aerodynamic sound. That is, there is no need for the acoustic signal processing method to generate the aerodynamic sound signal when the flag information does not indicate that the object generates the aerodynamic sound. This can reduce the processing load for generating the aerodynamic sound in the acoustic signal processing method.

For example, an acoustic signal processing method according to a fourth aspect of the present disclosure is the acoustic signal processing method according to the first or second aspect, wherein the obtaining includes obtaining geometry information indicating a shape of the object, and in the generating, the aerodynamic sound signal is generated based on the shape indicated by the geometry information obtained, the moving speed calculated, and the distance calculated.

Accordingly, since the aerodynamic sound signal is generated based on the shape of the object, the moving speed of the object, and the distance between the object and the listener, the listener can listen to a more realistic aerodynamic sound. That is, the acoustic signal processing method is capable of providing the listener with a greater sense of realism.

For example, an acoustic signal processing method according to a fifth aspect of the present disclosure is the acoustic signal processing method according to the fourth aspect, wherein in the generating, the aerodynamic sound signal is generated such that: frequency components are shifted toward higher frequencies as the moving speed calculated increases; a loudness of the aerodynamic sound increases as the distance calculated decreases; and the loudness of the aerodynamic sound increases as a spatial volume of the object increases, based on the geometry information obtained.

Accordingly, the aerodynamic sound that the listener hears can be controlled based on the moving speed of the object, the distance between the object and the listener, and the spatial volume of the object, allowing the listener to experience a greater sense of realism. That is, the acoustic signal processing method is capable of providing the listener with a greater sense of realism.

For example, an acoustic signal processing method according to a sixth aspect of the present disclosure is the acoustic signal processing method according to the fourth aspect, further including: calculating an amount of wind per unit time generated when the object moves, based on the moving speed calculated and the geometry information obtained, wherein in the generating, the aerodynamic sound signal is generated based on the moving speed calculated, the distance calculated, and the amount of wind calculated.

Accordingly, since the aerodynamic sound signal is generated based on the moving speed of the object, the distance between the object and the listener, and the above-mentioned amount of wind, the listener can listen to a more realistic aerodynamic sound. That is, the acoustic signal processing method is capable of providing the listener with a greater sense of realism.

For example, an acoustic signal processing method according to a seventh aspect of the present disclosure is the acoustic signal processing method according to the sixth aspect, wherein in the generating, the aerodynamic sound signal is generated such that: frequency components are shifted toward higher frequencies as the moving speed calculated increases; a loudness of the aerodynamic sound increases as the distance calculated decreases; and the loudness of the aerodynamic sound increases as the amount of wind calculated increases.

Accordingly, the aerodynamic sound that the listener hears can be controlled based on the moving speed of the object, the distance between the object and the listener, and the above-mentioned amount of wind, allowing the listener to experience a greater sense of realism. That is, the acoustic signal processing method is capable of providing the listener with a greater sense of realism.

For example, an acoustic signal processing method according to an eighth aspect of the present disclosure is the acoustic signal processing method according to any one of the first to seventh aspects, wherein in the generating, the aerodynamic sound signal is generated based on the moving speed calculated, the distance calculated, and a shape of a human ear.

Accordingly, since the aerodynamic sound signal is generated according to a sound generation model based on the shape of a human ear, the listener can listen to a more realistic aerodynamic sound. That is, the acoustic signal processing method is capable of providing the listener with a greater sense of realism.

For example, an acoustic signal processing method according to a ninth aspect of the present disclosure is the acoustic signal processing method according to any one of the first to seventh aspects, further including: storing aerodynamic sound data of sound recorded when wind reaches a human ear or a model simulating the human ear, wherein in the generating, the aerodynamic sound signal is generated based on the aerodynamic sound data stored, the moving speed calculated, and the distance calculated.

Accordingly, since the aerodynamic sound signal is generated according to data of a recording of actual generated sound, the listener can listen to a more realistic aerodynamic sound. That is, the acoustic signal processing method is capable of providing the listener with a greater sense of realism.

For example, an acoustic signal processing method according to a tenth aspect of the present disclosure is the acoustic signal processing method according to the sixth or seventh aspect, wherein in the calculating of the amount of wind, the amount of wind is calculated based on a surface area of the object viewed from a moving direction of the object indicated in the geometry information obtained, and the moving speed calculated.

As a result, the amount of wind is calculated based on the surface area of the object as viewed from the moving direction of the object indicated in the geometry information, and the moving speed. Since the aerodynamic sound signal is generated based on this amount of wind, the moving speed of the object, and the distance between the object and the listener, the listener can listen to a more realistic aerodynamic sound. That is, the acoustic signal processing method is capable of providing the listener with a greater sense of realism.

For example, an acoustic signal processing method according to an eleventh aspect of the present disclosure is the acoustic signal processing method according to the sixth or seventh aspect, wherein the calculating of the moving speed further includes calculating a moving direction of the object based on the first position information obtained, and in the calculating of the amount of wind, the amount of wind is calculated based on the geometry information obtained, the moving direction calculated, and the moving speed calculated.

Accordingly, the amount of wind is calculated based on the geometry information, moving direction, and moving speed. Since the aerodynamic sound signal is generated based on this amount of wind, the moving speed of the object, and the distance between the object and the listener, the listener can listen to a more realistic aerodynamic sound. That is, the acoustic signal processing method is capable of providing the listener with a greater sense of realism.

An acoustic signal processing method according to a twelfth aspect of the present disclosure includes: processing a noise signal with each of a plurality of band-emphasis filters to generate a plurality of processed noise signals, and synthesizing the plurality of processed noise signals to generate an aerodynamic sound signal indicating an aerodynamic sound generated when wind reaches an ear of a listener in a virtual space; and outputting the aerodynamic sound signal generated. Each of the plurality of band-emphasis filters is a filter for simulating the aerodynamic sound caused by a shape of the ear or a head of the listener.

Accordingly, the acoustic signal processing method can generate an aerodynamic sound signal indicating an aerodynamic sound generated when wind reaches the ear of the listener in the virtual space, and output the generated aerodynamic sound signal to the listener in the virtual space. This aerodynamic sound signal, for example, is output to headphones, a loudspeaker, or any other suitable audio device, allowing the listener to listen to the aerodynamic sound. Therefore, the listener can perceive that wind is blowing in the virtual space and experience a sense of realism. That is, the acoustic signal processing method according to one aspect of the present disclosure is capable of providing the listener with a sense of realism.

For example, an acoustic signal processing method according to a thirteenth aspect of the present disclosure is the acoustic signal processing method according to the twelfth aspect, wherein each of the plurality of band-emphasis filters multiplies the noise signal processed by the band-emphasis filter by a predetermined coefficient corresponding to the band-emphasis filter, and in the processing, the synthesizing is performed after the multiplying.

Accordingly, the aerodynamic sound generated by the acoustic signal processing method becomes more similar to the aerodynamic sound that the listener hears in the real-world space. Accordingly, the listener can experience a greater sense of realism. That is, the acoustic signal processing method according to one aspect of the present disclosure is capable of providing the listener with a greater sense of realism.

For example, an acoustic signal processing method according to a fourteenth aspect of the present disclosure is the acoustic signal processing method according to the twelfth or thirteenth aspect, wherein each of the plurality of band-emphasis filters has a characteristic that varies according to a speed of the wind reaching the ear.

Accordingly, the aerodynamic sound generated by the acoustic signal processing method becomes more similar to the aerodynamic sound that the listener hears in the real-world space. Accordingly, the listener can experience a greater sense of realism. That is, the acoustic signal processing method according to one aspect of the present disclosure is capable of providing the listener with a greater sense of realism.

For example, an acoustic signal processing method according to a fifteenth aspect of the present disclosure is the acoustic signal processing method according to any one of the twelfth to fourteenth aspects, wherein each of the plurality of band-emphasis filters has a characteristic that varies according to a direction of the wind reaching the ear.

Accordingly, the aerodynamic sound generated by the acoustic signal processing method becomes more similar to the aerodynamic sound that the listener hears in the real-world space. Accordingly, the listener can experience a greater sense of realism. That is, the acoustic signal processing method according to one aspect of the present disclosure is capable of providing the listener with a greater sense of realism.

A computer program according to a sixteenth aspect of the present disclosure is for causing a computer to execute the acoustic signal processing method according to any one of the first to fifteenth aspects.

Accordingly, the computer can execute the acoustic signal processing method described above in accordance with the computer program.

An acoustic signal processing device according to a seventeenth aspect of the present disclosure includes: an obtainer that obtains first position information indicating a position of an object that is a moving object in a virtual space, and second position information indicating a position of a listener in the virtual space; a first calculator that calculates a moving speed of the object based on the first position information obtained; a second calculator that calculates a distance between the object and the listener based on the first position information obtained and the second position information obtained; a generator that generates, based on the moving speed calculated and the distance calculated, an aerodynamic sound signal indicating an aerodynamic sound generated when wind caused by movement of the object reaches an ear of the listener; and an outputter that outputs the aerodynamic sound signal generated.

Accordingly, the acoustic signal processing device can generate an aerodynamic sound signal indicating an aerodynamic sound generated when wind caused by movement of the object reaches an ear of the listener, based on the position of the object in the virtual space and the position of the listener, and output the generated aerodynamic sound signal. This aerodynamic sound signal, for example, is output to headphones, a loudspeaker, or any other suitable audio device, allowing the listener to listen to the aerodynamic sound. Therefore, the listener can perceive that the object is moving and experience a sense of realism. That is, the acoustic signal processing device according to one aspect of the present disclosure is capable of providing the listener with a sense of realism.

Furthermore, these general or specific aspects may be implemented using a system, a device, a method, an integrated circuit, a computer program, or a non-transitory computer-readable recording medium such as a CD-ROM, or any combination thereof.

Hereinafter, embodiments will be described with reference to the drawings.

The embodiments described below each show a general or specific example. The numerical values, shapes, materials, elements, the arrangement and connection of the elements, steps, and the processing order of the steps, etc., described in the following embodiments are mere examples, and are therefore not intended to limit the scope of the claims.

In the following description, ordinal numbers such as first and second may be given to elements. These ordinal numbers are given to elements in order to distinguish between the elements, and thus do not necessarily correspond to an order that has intended meaning. Such ordinal numbers may be switched as appropriate, new ordinal numbers may be given, or the ordinal numbers may be removed.

The drawings are schematic diagrams, and are not necessarily precise depictions. Accordingly, scaling is not necessarily consistent throughout the drawings. In the drawings, the same reference numerals are given to substantially similar configurations, and repeated description thereof may be omitted or simplified.

In the present specification, terms indicating relationships between elements such as "perpendicular" or numerical ranges include, in addition to their exact meanings, substantially equivalent ranges, for example, with differences of about several percent.

Embodiment

Examples of Devices to Which an Acoustic Processing Technique or Encoding/Decoding Technique of the Present Disclosure Can Be Applied

Three-dimensional Sound Reproduction System

FIG. 2B illustrates three-dimensional sound (immersive audio) reproduction system A0000 as one example of a system to which the acoustic processing or decoding processing according to the present disclosure is applicable. Three-dimensional sound reproduction system A0000 includes acoustic signal processing device A0001 and audio presentation device A0002.

Acoustic signal processing device A0001 applies acoustic processing to an audio signal emitted by a virtual sound source to generate an acoustic-processed audio signal to be presented to a listener. The audio signal is not limited to speech and may be any audible sound. Acoustic processing is, for example, signal processing applied to the audio signal to reproduce one or a plurality of sound-related effects that sound generated from a sound source undergoes during the period from when the sound is emitted until the listener hears it. Acoustic signal processing device A0001 performs acoustic processing based on information describing factors that cause the aforementioned sound-related effects. The spatial information includes, for example, information indicating the positions of the sound source, listener, and surrounding objects, information indicating the shape of the space, and parameters related to sound propagation. Acoustic signal processing device A0001 is, for example, a personal computer (PC), smartphone, tablet, or game console.

The acoustic- processed signal is presented to the listener (user) from audio presentation device A0002. Audio presentation device A0002 is connected to acoustic signal processing device A0001 via wireless or wired communication. The acoustic-processed audio signal generated by acoustic signal processing device A0001 is transmitted to audio presentation device A0002 via wireless or wired communication. When audio presentation device A0002 is configured as a plurality of devices, such as a device for the right ear and a device for the left ear, the plurality of devices present sound in synchronization by communicating between the plurality of devices or between each of the plurality of devices and acoustic signal processing device A0001. Audio presentation device A0002 is, for example, headphones worn on the listener's head, earphones, a head-mounted display, or surround speakers configured with a plurality of fixed speakers.

Three-dimensional sound reproduction system A0000 may be used in combination with an image presentation device or stereoscopic image presentation device that provides an Extended Reality (ER) experience, including AR/VR, visually.

Although FIG. 2B illustrates a system configuration example in which acoustic signal processing device A0001 and audio presentation device A0002 are separate devices, the three-dimensional sound reproduction system to which the acoustic signal processing method or decoding method according to the present disclosure is applicable is not limited to the configuration of FIG. 2B. For example, acoustic signal processing device A0001 may be included in audio presentation device A0002, and audio presentation device A0002 may perform both acoustic processing and sound presentation. The acoustic processing described in the present disclosure may be divided between acoustic signal processing device A0001 and audio presentation device A0002 and performed, or a server connected via a network to acoustic signal processing device A0001 or audio presentation device A0002 may perform part or all of the acoustic processing described in the present disclosure.

Although the naming "acoustic signal processing device" A0001 is used in the above description, when acoustic signal processing device A0001 performs acoustic processing by decoding a bitstream generated by encoding at least a portion of data of an audio signal or spatial information used for acoustic processing, acoustic signal processing device A0001 may be called a decoding device.

Encoding Device Example

FIG. 2C is a functional block diagram illustrating the configuration of encoding device A0100, which is one example of an encoding device of the present disclosure.

Input data A0101 is data to be encoded that includes spatial information and/or an audio signal to be input to encoder A0102. Spatial information will be described in detail later.

Encoder A0102 encodes input data A0101 to generate encoded data A0103. Encoded data A0103 is, for example, a bitstream generated by the encoding process.

Memory A0104 stores encoded data A0103. Memory A0104 may be, for example, a hard disk or a solid-state drive (SSD), or may be any other type of memory.

Although a bitstream generated by the encoding process was given as one example of encoded data A0103 stored in memory A0104 in the above description, encoded data A0103 may be data other than a bitstream. For example, encoding device A0100 may store, in memory A0104, converted data generated by converting the bitstream into a predetermined data format. The converted data may be, for example, a file storing one or a plurality of bitstreams or a multiplexed stream. Here, the file is, for example, a file having a file format such as ISO Base Media File Format (ISOBMFF). Encoded data A0103 may be in the form of a plurality of packets generated by dividing the above-mentioned bitstream or file. When the bitstream generated by encoder A0102 is to be converted into data different from the bitstream, encoding device A0100 may include a converter not shown in the figure, or may perform the conversion process using a central processing unit (CPU).

Decoding Device Example

FIG. 2D is a functional block diagram illustrating the configuration of decoding device A0110, which is one example of a decoding device of the present disclosure.

Memory A0114 stores, for example, the same data as encoded data A0103 generated by encoding device A0100. Memory A0114 reads the stored data and inputs it as input data A0113 to decoder A0112. Input data A0113 is, for example, a bitstream to be decoded. Memory A0114 may be, for example, a hard disk or a SSD, or may be any other type of memory.

Decoding device A0110 may use, as input data A0113, converted data generated by converting the data read from memory A0114, rather than directly using the data stored in memory A0114 as input data A0113. The data before conversion may be, for example, multiplexed data storing one or a plurality of bitstreams. Here, the multiplexed data may be, for example, a file having a file format such as ISOBMFF. The data before conversion may be in the form of a plurality of packets generated by dividing the above-mentioned bitstream or file. When converting data different from the bitstream read from memory A0114 into a bitstream, decoding device A0110 may include a converter not shown in the figure, or may perform the conversion process using a CPU.

Decoder A0112 decodes input data A0113 to generate audio signal A0111 to be presented to a listener.

Another Example of Encoding Device

FIG. 2E is a functional block diagram illustrating the configuration of encoding device A0120, which is another example of an encoding device of the present disclosure. In FIG. 2E, configurations having the same functions as those in FIG. 2C are given the same reference numerals as in FIG. 2C, and explanations of these configurations are omitted.

Encoding device A0120 differs from encoding device A0100 in that while encoding device A0100 stored encoded data A0103 in memory A0104, encoding device A0120 includes transmitter A0121 that transmits encoded data A0103 to an external destination.

Transmitter A0121 transmits transmission signal A0122 to another device or server based on encoded data A0103 or data in another data format generated by converting encoded data A0103. The data used for generating transmission signal A0122 is, for example, the bitstream, multiplexed data, file, or packet explained in regard to encoding device A0100.

Another Example of Decoding Device

FIG. 2F is a functional block diagram illustrating the configuration of decoding device A0130, which is another example of a decoding device of the present disclosure. In FIG. 2F, configurations having the same functions as those in FIG. 2D are given the same reference numerals as in FIG. 2D, and explanations of these configurations are omitted.

Decoding device A0130 differs from decoding device A0110 in that while decoding device A0110 read input data A0113 from memory A0114, decoding device A0130 includes receiver A0131 that receives input data A0113 from an external source.

Receiver A0131 receives reception signal A0132 thereby obtaining reception data, and outputs input data A0113 to be input to decoder A0112. The reception data may be the same as input data A0113 input to decoder A0112, or may be data in a data format different from input data A0113. When the reception data is data in a data format different from input data A0113, receiver A0131 may convert the reception data to input data A0113, or a converter not shown in the figure or a CPU included in decoding device A0130 may convert the reception data to input data A0113. The reception data is, for example, the bitstream, multiplexed data, file, or packet explained in regard to encoding device A0120.

Explanation of Functions of Decoder

FIG. 2G is a functional block diagram illustrating the configuration of decoder A0200, which is one example of decoder A0112 in FIG. 2D or FIG. 2F.

Input data A0113 is an encoded bitstream and includes encoded audio data, which is an encoded audio signal, and metadata used for acoustic processing.

Spatial information manager A0201 obtains metadata included in input data A0113, and analyzes the metadata. The metadata includes information describing elements that act on sounds arranged in a sound space. Spatial information manager A0201 manages spatial information necessary for acoustic processing obtained by analyzing the metadata, and provides the spatial information to renderer A0203. Note that in the present disclosure, information used for acoustic processing is referred to as spatial information, but it may be referred to by other names. The information used for said acoustic processing may be referred to as, for example, sound space information or scene information used for acoustic processing. When the information used for acoustic processing changes over time, the spatial information input to renderer A0203 may be referred to as a spatial state, a sound space state, a scene state, or the like.

The spatial information may be managed for each sound space or for each scene. For example, when expressing different rooms as virtual spaces, each room may be managed as a scene of a different sound space, or even for the same space, spatial information may be managed as different scenes according to the scene being expressed. In the management of spatial information, an identifier for identifying each item of spatial information may be assigned. The spatial information data may be included in a bitstream, which is a form of input data, or the bitstream may include an identifier of the spatial information, and the spatial information data may be obtained from somewhere other than from the bitstream. When the bitstream includes only the identifier of the spatial information, at the time of rendering, the spatial information data stored in the memory of acoustic signal processing device A0001 or in an external server may be obtained as input data using the identifier of the spatial information.

Note that the information managed by spatial information manager A0201 is not limited to information included in the bitstream. For example, input data A0113 may include data indicating characteristics or structure of a space obtained from a VR or AR software application or server as data not included in the bitstream. For example, input data A0113 may include data indicating characteristics or a position of a listener or object as data not included in the bitstream. Input data A0113 may include information obtained by a sensor included in a terminal that includes the decoding device as information indicating the position of the listener, or information indicating the position of the terminal estimated based on information obtained by the sensor. That is, spatial information manager A0201 may communicate with an external system or server and obtain spatial information and the position of the listener. Spatial information manager A0201 may obtain clock synchronization information from an external system and execute a process to synchronize with the clock of renderer A0203. The space in the above explanation may be a virtually formed space, that is, a VR space, or it may be a real-world space (actual space) or a virtual space corresponding to a real-world space, that is, an AR space or a mixed reality (MR) space. The virtual space may also be called a sound field or sound space. The information indicating position in the above explanation may be information such as coordinate values indicating a position in space, information indicating a relative position with respect to a predetermined reference position, or information indicating movement or acceleration of a position in space.

Audio data decoder A0202 decodes encoded audio data included in input data A0113 to obtain an audio signal.

The encoded audio data obtained by three-dimensional sound reproduction system A0000 is, for example, a bitstream encoded in a predetermined format such as MPEG-H 3D Audio (ISO/IEC 23008-3). Note that MPEG-H 3D Audio is merely one example of an encoding method that can be used when generating encoded audio data to be included in the bitstream, and the bitstream may include encoded audio data encoded using other encoding methods. For example, the encoding method used may be a lossy codec such as MPEG-1 Audio Layer-3 (MP3), Advanced Audio Coding (AAC), Windows Media Audio (WMA), Audio Codec-3 (AC3), or Vorbis, or a lossless codec such as Apple Lossless Audio Codec (ALAC) or Free Lossless Audio Codec (FLAC), or any other arbitrary encoding method not mentioned above. For example, pulse code modulation (PCM) data may be considered as a type of encoded audio data. In such cases, the decoding process may, for example, when the number of quantization bits of the PCM data is N, convert the N-bit binary number into a numerical format (for example, floating-point format) that can be processed by renderer A0203.

Renderer A0203 receives an audio signal and spatial information as inputs, applies acoustic processing to the audio signal using the spatial information, and outputs acoustic-processed audio signal A0111.

Before starting rendering, spatial information manager A0201 reads metadata of the input signal, detects rendering items such as objects or sounds specified by the spatial information, and transmits the detected rendering items to renderer A0203. After rendering starts, spatial information manager A0201 obtains the temporal changes in the spatial information and the listener's position, and updates and manages the spatial information. Spatial information manager A0201 then transmits the updated spatial information to renderer A0203. Renderer A0203 generates and outputs an audio signal with acoustic processing added based on the audio signal included in the input data and the spatial information received from spatial information manager A0201.

The update processing of the spatial information and the output processing of the audio signal added with acoustic processing may be executed in the same thread, or spatial information manager A0201 and renderer A0203 may be allocated to respective independent threads. When the update processing of the spatial information and the output processing of the audio signal added with acoustic processing are processed in different threads, the activation frequency of the threads may be set individually, or the processing may be executed in parallel.

By executing processing in different independent threads for spatial information manager A0201 and renderer A0203, computational resources can be preferentially allocated to renderer A0203, allowing for safe implementation even in cases of sound output processing where even slight delays cannot be tolerated, for example, sound output processing where a popping noise occurs if there is a delay of even one sample (0.02 msec). In this case, allocation of computational resources to spatial information manager A0201 is restricted. However, the update of spatial information (for example, a process such as updating the direction of the listener's face) is a process that is performed at a low frequency compared to the output processing of the audio signal. Therefore, since responding instantaneously is not necessarily required unlike the output processing of the audio signal, restricting the allocation of computational resources does not significantly affect the acoustic quality provided to the listener.

The update of spatial information may be executed periodically at predetermined times or intervals, or may be executed when predetermined conditions are met. The update of spatial information may be executed manually by the listener or the manager of the sound space, or execution may be triggered by changes in an external system. For example, when the listener operates a controller to instantly warp the position of their avatar, rapidly advance or rewind time, or when the manager of the virtual space suddenly changes the environment of the scene as a production effect, the thread in which spatial information manager A0201 is arranged may be activated as a one-time interrupt process in addition to periodic activation.

The role of the information update thread that executes the update processing of spatial information includes, for example, processing to update the position or orientation of the listener's avatar in the virtual space based on the position or orientation of the VR goggles worn by the listener, and updating the position of objects moving within the virtual space, and is handled within a processing thread that activates at a relatively low frequency of approximately several tens of Hz. Such processing that reflects the nature of direct sound may be performed in processing threads with low occurrence frequency. This is because the frequency at which the nature of direct sound changes is lower than the frequency of occurrence of audio processing frames for audio output. By doing so, the computational load of the processing can be relatively reduced, and the risk of pulsive noise occurring due to unnecessarily frequent information updates can be avoided.

FIG. 2H is a functional block diagram illustrating the configuration of decoder A0210, which is another example of decoder A0112 in FIG. 2D or FIG. 2F.

FIG. 2H differs from FIG. 2G in that input data A0113 includes an unencoded audio signal rather than encoded audio data. Input data A0113 includes an audio signal and a bitstream including metadata.

Spatial information manager A0211 is the same as spatial information manager A0201 in FIG. 2G, so repeated explanation is omitted.

Renderer A0213 is the same as renderer A0203 in FIG. 2G, so repeated explanation is omitted.

Note that while the configuration in FIG. 2H is referred to as a decoder in the above description, it may also be called an acoustic processor that performs acoustic processing. A device including an acoustic processor may be called an acoustic processing device rather than a decoding device. Acoustic signal processing device A0001 may be called an acoustic processing device.

Physical Configuration of Acoustic Signal Processing Device

FIG. 2I illustrates one example of a physical configuration of an acoustic signal processing device. The acoustic signal processing device in FIG. 2I may be a decoding device. A portion of the configuration described here may be included in audio presentation device A0002. The acoustic signal processing device illustrated in FIG. 2I is one example of the above-mentioned acoustic signal processing device A0001.

The acoustic signal processing device in FIG. 2I includes a processor, memory, a communication I/F, a sensor, and a loudspeaker.

The processor is, for example, a central processing unit (CPU) or digital signal processor (DSP) or graphics processing unit (GPU), and the acoustic processing or decoding processing of the present disclosure may be performed by the CPU or DSP or GPU executing a program stored in the memory. The processor may be a dedicated circuit that performs signal processing on audio signals, including the acoustic processing of the present disclosure.

The memory includes, for example, random access memory (RAM) or read-only memory (ROM). The memory may include magnetic storage media such as a hard disks or semiconductor memories such as solid state drives (SSDs). The memory may include internal memory incorporated in the CPU or GPU.

The communication interface (I/F) is, for example, a communication module that supports a communication method such as Bluetooth (registered trademark) or WiGig (registered trademark). The acoustic signal processing device illustrated in FIG. 2I includes a function to communicate with other communication devices via the communication I/F, and obtains a bitstream to be decoded. The obtained bitstream is, for example, stored in the memory.

The communication module includes, for example, a signal processing circuit that supports the communication method, and an antenna. In the above example, Bluetooth (registered trademark) or WiGig (registered trademark) were given as examples of the communication method, but the supported communication method may be Long Term Evolution (LTE), New Radio (NR), or Wi-Fi (registered trademark). The communication I/F may also be a wired communication method such as Ethernet (registered trademark), Universal Serial Bus (USB), or High-Definition Multimedia Interface (HDMI) (registered trademark), rather than the wireless communication methods described above.

The sensor performs sensing to estimate the position or orientation of the listener. More specifically, the sensor estimates the position and/or orientation of the listener based on one or more detection results of one or more of the position, orientation, movement, velocity, angular velocity, or acceleration of a part or all of the listener's body, such as the listener's head, and generates position information indicating the position and/or orientation of the listener. The position information may be information indicating the position and/or orientation of the listener in real-world space, or may be information indicating the displacement of the position and/or orientation of the listener with respect to the position and/or orientation of the listener at a predetermined time point. The position information may be information indicating a position and/or orientation relative to the three-dimensional sound reproduction system or an external device including the sensor.

The sensor may be, for example, an imaging device such as a camera or a distance measuring device such as a light detection and ranging (LiDAR) distance measuring device, and may capture an image of the movement of the listener's head and detect the movement of the listener's head by processing the captured image. As the sensor, a device that performs position estimation using radio waves in any given frequency band such as millimeter waves may be used.

The acoustic signal processing device illustrated in FIG. 2I may obtain position information via the communication I/F from an external device including a sensor. In such cases, the acoustic signal processing device need not include a sensor. Here, an external device refers to, for example, audio presentation device A0002 described in FIG. 2B, or a stereoscopic image reproduction device worn on the listener's head. In this case, the sensor is configured as a combination of various sensors, such as a gyro sensor and an acceleration sensor, for example.

As the speed of the movement of the listener's head, the sensor may detect, for example, the angular speed of rotation about at least one of three mutually orthogonal axes in the sound space as the axis of rotation or the acceleration of displacement in at least one of the three axes as the direction of displacement.

As the amount of the movement of the listener's head, the sensor may detect, for example, the amount of rotation about at least one of three mutually orthogonal axes in the sound space as the axis of rotation or the amount of displacement in at least one of the three axes as the direction of displacement. More specifically, sensor detects 6DoF (position (x, y, z) and angle (yaw, pitch, roll)) as the position of the listener. The sensor is configured as a combination of various sensors used for detecting movement, such as a gyro sensor and an acceleration sensor.

A sensor may be implemented by any device, such as a camera or a Global Positioning System (GPS) receiver, as long as it can detect the position of the listener. Position information obtained by performing self-localization estimation using laser imaging detection and ranging (LiDAR) or the like may be used. For example, when the audio signal reproduction system is implemented by a smartphone, the sensor is included in the smartphone.

The sensor may include a temperature sensor such as a thermocouple that detects the temperature of the acoustic signal processing device illustrated in FIG. 2I, and a sensor that detects the remaining level of a battery included in or connected to the acoustic signal processing device.

The loudspeaker includes, for example, a diaphragm, a driving mechanism such as a magnet or voice coil, and an amplifier, and presents the acoustic-processed audio signal as sound to the listener. The loudspeaker operates the driving mechanism according to the audio signal (more specifically, a waveform signal indicating the waveform of the sound) amplified via the amplifier, and vibrates the diaphragm by means of the driving mechanism. In this way, the diaphragm vibrating according to the audio signal generates sound waves, which propagate through the air and are transmitted to the listener's ears, allowing the listener to perceive the sound.

Although in this example, the acoustic signal processing device illustrated in FIG. 2I includes a loudspeaker and provides the acoustic-processed audio signal via the loudspeaker, the means for providing the audio signal is not limited to the this configuration. For example, the acoustic-processed audio signal may be output to external audio presentation device A0002 connected via a communication module. The communication performed by the communication module may be wired or wireless. As another example, the acoustic signal processing device illustrated in FIG. 2I may include a terminal that outputs an analog audio signal, and may present the audio signal from earphones or the like by connecting the earphone cable to the terminal. In this case, audio presentation device A0002, such as headphones, earphones, a head-mounted display, neck speakers, wearable speakers worn on the listener's head or a part of the body, or surround speakers configured with a plurality of fixed speakers, reproduces the audio signal.

Physical Configuration of Encoding Device

FIG. 2J illustrates one example of a physical configuration of an encoding device. The encoding device illustrated in FIG. 2J is one example of the above-mentioned encoding devices A0100 and A0120.

The encoding device in FIG. 2J includes a processor, memory, and a communication I/F.

The processor is, for example, a central processing unit (CPU) or digital signal processor (DSP), and the encoding processing of the present disclosure may be performed by the CPU or DSP executing a program stored in the memory. The processor may be a dedicated circuit that performs signal processing on audio signals, including the encoding processing of the present disclosure.

The memory includes, for example, random access memory (RAM) or read-only memory (ROM). The memory may include magnetic storage media such as a hard disks or semiconductor memories such as solid state drives (SSDs). The memory may include internal memory incorporated in the CPU or GPU.

The communication interface (I/F) is, for example, a communication module that supports a communication method such as Bluetooth (registered trademark) or WiGig (registered trademark). The encoding device includes a function to communicate with other communication devices via the communication I/F, and transmits an encoded bitstream.

The communication module includes, for example, a signal processing circuit that supports the communication method, and an antenna. In the above example, Bluetooth (registered trademark) or WiGig (registered trademark) were given as examples of the communication method, but the supported communication method may be Long Term Evolution (LTE), New Radio (NR), or Wi-Fi (registered trademark). The communication I/F may also be a wired communication method such as Ethernet (registered trademark), Universal Serial Bus (USB), or High-Definition Multimedia Interface (HDMI) (registered trademark), rather than the wireless communication methods described above.

Configuration

A configuration of acoustic signal processing device 100 according to an embodiment of the present disclosure will be described. FIG. 3A is a block diagram illustrating the functional configuration of acoustic signal processing device 100 according to the present embodiment.

Acoustic signal processing device 100 according to the present embodiment is for generating and outputting an aerodynamic sound signal indicating an aerodynamic sound generated when wind W caused by movement of an object in a virtual space (sound reproduction space) reaches an ear of listener L. Aerodynamic sound is a sound that is generated when wind W reaches the ears of listener L in the virtual space, and is also a sound that is caused by the shape of the ears or head of listener L. Acoustic signal processing device 100 according to the present embodiment is for various applications in a virtual space, such as virtual reality or augmented reality (VR/AR) applications.

The "object in a virtual space" is not particularly limited; it is sufficient if it is included in content to be displayed on display 300 that displays content (video in this example) executed in the virtual space. The object is a moving object, examples of which include an animal, a plant, and an artificial or natural object. Examples of objects representing artificial objects include vehicles, bicycles, and aircraft. Examples of the artificial object include sports equipment, such as a baseball bat and a tennis racket; furniture, such as a desk, a chair, an electric fan, and a wall clock; and a building, such as an apartment complex and a commercial facility. Note that the object is, as an example, at least one that can move or one that can be moved in the content, but is not limited thereto. Note that electric fan 600 illustrated in FIG. 2A is installed on the ceiling, and even if electric fan 600 itself does not move, blades 601 of electric fan 600 move. Such electric fan 600 is also included in the object.

The "aerodynamic sound" according to the present embodiment is the sound generated when wind W caused by movement of the object in a virtual space reaches an ear of listener L. More specifically, the aerodynamic sound is the sound caused by wind W generated by the movement of air due to the movement of the object. Moreover "ear" means at least one of the auricle and the outer ear.

Acoustic signal processing device 100 generates an aerodynamic sound signal indicating an aerodynamic sound in a virtual space, and outputs the aerodynamic sound signal to headphones 200.

Next, headphones 200 will be described.

Headphones 200 serve as a device that reproduces the aerodynamic sound, that is, an audio output device. More specifically, headphones 200 reproduce the aerodynamic sound based on the aerodynamic sound signal output by acoustic signal processing device 100. This allows listener L to listen to the aerodynamic sound.

Instead of headphones 200, another output channel, such as a loudspeaker, may be used.

As illustrated in FIG. 3A, headphones 200 include head sensor 201 and outputter 202.

Head sensor 201 senses the position of listener L determined by coordinates on a horizontal plane and the height in the vertical direction in the virtual space, and outputs, to acoustic signal processing device 100, second position information indicating the position of listener L in the virtual space.

Head sensor 201 may sense information of six degrees of freedom (6DoF) of the head of listener L. For example, head sensor 201 may be an inertial measurement unit (IMU), an accelerometer, a gyroscope, or a magnetic sensor, or a combination of these.

Outputter 202 is a device that reproduces a sound that reaches listener L in a sound reproduction space. More specifically, outputter 202 reproduces the aerodynamic sound based on an aerodynamic sound signal indicating the aerodynamic sound processed by acoustic signal processing device 100 and output from acoustic signal processing device 100.

Next, display 300 will be described.

Display 300 is a display device that displays content (e.g., a video) including an object in a virtual space. The process for display 300 to display the content will be described later. Display 300 is, for example, a display panel, such as a liquid crystal panel or an organic electroluminescence (EL) panel.

Further, acoustic signal processing device 100 illustrated in FIG. 3A will be described.

As illustrated in FIG. 3A, acoustic signal processing device 100 includes obtainer 110, calculator 120, generator 130, outputter 140, and storage 150.

Obtainer 110 obtains, for example, first position information and second position information from an input signal. The input signal will be described below. The first position information indicates the position of an object in a virtual space. The second position information indicates, as described above, the position of listener L in a virtual space. Obtainer 110 may obtain the first position information and the second position information from a source other than the input signal.

Obtainer 110 may further obtain flag information and may further obtain geometry information. The flag information indicates whether or not the object generates an aerodynamic sound. The geometry information indicates the shape of the object.

In the present embodiment, obtainer 110 obtains the first position information, the flag information, and the geometry information from a device (for example, server device 500, such as a cloud server) other than acoustic signal processing device 100. The source is however not limited thereto. Obtainer 110 also obtains the second position information from headphones 200 (head sensor 201, more specifically). The source is however not limited thereto.

The input signal includes, for example, spatial information, sensor information, and sound data (audio signal). The above information and sound data may be included in one input signal, or the above-mentioned information and sound data may be included in a plurality of separate signals. The input signal may include a bitstream including sound data and metadata (control information), and in such cases, the metadata may include spatial information and information for identifying the sound data.

The first position information, second position information, geometry information, and flag information explained above may be included in the input signal, or may be included elsewhere. More specifically, the first information, geometry information, and flag information may be included in the spatial information, and the second information may be generated based on information obtained from sensor information. The sensor information may be obtained from head sensor 201, or may be obtained from another external device.

The spatial information is information related to the sound space (three-dimensional sound field) created by the three-dimensional sound reproduction system, and includes information about objects included in the sound space and information about the listener. The objects include sound source objects that emit sound and become sound sources, and non-sound-emitting objects that do not emit sound. The non-sound-emitting object functions as an obstacle object that reflects sound emitted by the sound source object, but a sound source object may also function as an obstacle object that reflects sound emitted by another sound source object. The obstacle object may also be called a reflection object.

Information commonly assigned to both sound source objects and non-sound-emitting objects includes position information, geometry information, and attenuation rate of loudness when the object reflects sound.

The position information is represented by coordinate values of three axes, for example, the X-axis, the Y-axis, and the Z-axis of Euclidean space, but it does not necessarily have to be three-dimensional information. The position information may be, for example, two-dimensional information represented by coordinate values of two axes, the X-axis and the Y-axis. The position information of the object is defined by a representative position of the shape expressed by a mesh or voxel.

The geometry information may include information about the material of the surface.

The attenuation rate may be expressed as a real number less than or equal to 1 and greater than or equal to 0, or may be expressed as a negative decibel value. Since loudness does not increase from reflection in real-world space, the attenuation rate is set to a negative decibel value. However, for example, to create an eerie atmosphere in a non-realistic space, an attenuation rate greater than or equal to 1, that is, a positive decibel value, may be intentionally set. The attenuation rate may be set to different values for each of a plurality of frequency bands, or may be set independently for each frequency band. In cases where the attenuation rate is set for each type of material of the object surface, a value of the corresponding attenuation rate may be used based on information about the surface material.

Information commonly assigned to both sound source objects and non-sound-emitting objects may include information indicating whether the object belongs to an animate thing or information indicating whether the object is a mobile body. When the object is a mobile body, the position information may move over time, and the changed position information or the amount of change is transmitted to renderers A0203 and A0213.

Information related to the sound source object includes, in addition to the information commonly assigned to both sound source objects and non-sound-emitting objects mentioned above, sound data and information necessary for radiating the sound data into the sound space. The sound data is data representing sound perceived by the listener, indicating information such as the frequency and intensity of the sound. The sound data is typically a PCM signal, but may also be data compressed using an encoding method such as MP3. In such cases, since the signal needs to be decoded at least before reaching generator 130, renderers A0203 and A0213 may include a decoder (not illustrated). Alternatively, the signal may be decoded in audio data decoder A0202.

At least one item of sound data may be set for one sound source object, and a plurality of items of sound data may be set. Identification information for identifying each item of sound data may be assigned, and as information related to the sound source object, the identification information of the sound data may be retained as metadata.

As information necessary for radiating sound data into the sound space, for example, information on a reference loudness that serves as a standard when reproducing the sound data, information related to the position of the sound source object, information related to the orientation of the sound source object, and information related to the directivity of the sound emitted by the sound source object may be included.

The information on the reference loudness may be, for example, the root mean square value of the amplitude of the sound data at the sound source position when radiating the sound data into the sound space, and may be expressed as a floating-point decibel (dB) value. For example, when the reference loudness is 0 dB, the information on the reference loudness may indicate that the sound is to be radiated into the sound space from the position indicated by the above-mentioned position information at the same loudness, without increasing or decreasing it, of the signal level indicated by the sound data. The information on the reference loudness may indicate that, when it is - 6 dB, the sound is to be radiated into the sound space from the position indicated by the above-mentioned position information at approximately half the loudness of the signal level indicated by the sound data. The information on the reference loudness may be assigned to a single item of sound data or collectively to a plurality of items of sound data.

For example, information indicating time-series variations in the loudness of the sound source may be included as information on loudness included in the information necessary for radiating sound data into the sound space. For example, when the sound space is a virtual conference room and the sound source is a speaker, the loudness transitions intermittently over short periods of time. Expressing it even more simply, it can also be said that sound portions and silent portions occur alternately. When the sound space is a concert hall and the sound source is a performer, the loudness is maintained for a certain duration of time. When the sound space is a battlefield and the sound source is an explosive, the loudness of the explosion sound becomes large for only an instant and then continues to be silent thereafter. In this way, the loudness information of the sound source includes not only information on the magnitude of sound but also information on the transition of sound magnitude, and such information may be used as information indicating the characteristics of the sound data.

Here, the information on the transition of sound magnitude may be data showing frequency characteristics in chronological order. The information on the transition of sound magnitude may be data indicating the duration of a sound interval. The information on the transition of sound magnitude may be data indicating the chronological sequence of durations of sound intervals and silent intervals. The information on the transition of sound magnitude may be data that enumerates, in chronological order, a plurality of sets of data including a duration during which the amplitude of the sound signal can be considered stationary (can be considered approximately constant) and the amplitude value of said signal during that duration. The information on the transition of sound magnitude may be data of a duration during which the frequency characteristic of the sound signal can be considered stationary. The information on the transition of sound magnitude may be data that enumerates, in chronological order, a plurality of sets of data including a duration during which the frequency characteristic of the sound signal can be considered stationary and the frequency characteristic data during that duration. The information on the transition of sound magnitude may be in the format of, for example, data indicating the general shape of a spectrogram. The loudness that serves as the standard for the above-mentioned frequency characteristic may be used as the reference loudness. The information indicating the reference loudness and the information indicating the characteristics of the sound data may be used not only to calculate the loudness of direct sound or reflected sound to be perceived by the listener, but also for selection processing for selecting whether or not to make the listener perceive the sound.

Information regarding orientation is typically expressed in terms of yaw, pitch, and roll. Alternatively, the orientation information may be expressed in terms of azimuth (yaw) and elevation (pitch), omitting the rotation of roll. The orientation information may change over time, and when changed, it is transmitted to renderers A0203 and A0213.

Information related to the listener is information regarding the position information and orientation of the listener in the sound space. The position information is represented by the position on the X, Y, and Z-axes of Euclidean space, but it does not necessarily have to be three-dimensional information and may be two-dimensional information. Information regarding orientation is typically expressed in terms of yaw, pitch, and roll. Alternatively, the orientation information may be expressed in terms of azimuth (yaw) and elevation (pitch), omitting the rotation of roll. The position information and orientation information may change over time, and when changed, they are transmitted to renderers A0203 and A0213.

The sensor information includes information on the rotation amount or displacement amount detected by the sensor worn by the listener, and the position and orientation of the listener. The sensor information is transmitted to renderers A0203 and A0213, and renderers A0203 and A0213 update the information on the position and orientation of the listener based on the sensor information. The sensor information may use position information obtained by performing self-localization estimation by a mobile terminal using the global positioning system (GPS), a camera, or laser imaging detection and ranging (LiDAR), for example. Information obtained from outside through a communication module, other than from a sensor, may also be detected as sensor information. Information indicating the temperature of acoustic signal processing device 100, and information indicating the remaining level of the battery may be obtained as sensor information from the sensor. Information indicating the computational resources (CPU capability, memory resources, PC performance) of acoustic signal processing device 100 or audio presentation device A0002 may be obtained in real time as sensor information.

Here, the first position information, second position information, flag information, and geometry information will be described in greater detail.

First, the first position information will be described.

As described above, an "object in a virtual space" is included in "content (e.g., a video) to be displayed on display 300" and is at least one of an object that can move or an object that can be moved in the content. For example, the object in the virtual space is vehicle 400 illustrated in FIG. 1.

The first position information indicates where in the virtual space vehicle 400 is located at a certain time point. In the virtual space, vehicle 400 may move as a result of being driven by a driver. To address this, obtainer 110 obtains the first position information continuously.

Obtainer 110, for example, obtains the first position information each time the spatial information is updated by spatial information managers A0201 and A0211.

Next, the second position information will be described.

Listener L can move in the virtual space. The second position information indicates where in the virtual space listener L is located at a certain time point. Note that since listener L can move in the virtual space, obtainer 110 obtains the second position information continuously. Obtainer 110, for example, obtains the second position information each time the spatial information is updated by spatial information managers A0201 and A0211.

Next, the geometry information will be described.

The geometry information indicates the shape of the object (for example, vehicle 400) in the virtual space. The geometry information indicates the shape of the object, more specifically, the three-dimensional shape of the object as a rigid body. The shape of the object is, for example, represented by a sphere, a rectangular parallelepiped, a cube, a polyhedron, a cone, a pyramid, a cylinder, or a prism alone or in combination. Note that the geometry information may be expressed, for example, by mesh data, or by voxels, point groups in three dimensions, or a set of planes formed of vertices with three-dimensional coordinates.

Furthermore, the flag information will be described.

The flag information indicates whether or not the object (for example, vehicle 400) generates an aerodynamic sound. Stated differently, the flag information indicates whether to generate the aerodynamic sound or not to generate the aerodynamic sound. For example, when the flag information indicates that the aerodynamic sound is to be generated, "1" is indicated as a flag, whereas when the flag information indicates that the aerodynamic sound is not to be generated, "0" is indicated as a flag. The flag information is one example of metadata related to the object.

The flag information indicating whether or not the object generates an aerodynamic sound is determined in advance in accordance with the object indicated by the flag information. For example, whether the flag information indicates true or false may be determined in advance by an administrator of the content (i.e., the video) displayed on display 300. A selector (not illustrated in FIG. 3A) may be included in acoustic signal processing device 100, and selection (selection processing) of whether or not the object generates an aerodynamic sound based on the flag information may be executed by the selector. The selection processing may be executed in consideration of the overall computational load of acoustic signal processing device 100 related to the generation of sounds other than the aerodynamic sound. A priority may be set in advance for the aerodynamic sound, and information on the priority may be included in the flag information. For example, selection may be made to not generate aerodynamic sounds with low priority in consideration of the processing capacity of acoustic signal processing device 100 or the overall computational load related to the generation of the sound space. The processing capacity of acoustic signal processing device 100 may be compared with the overall computational load, and even if the flag information is true, selection may be made to not generate the aerodynamic sound when the processing capacity of acoustic signal processing device 100 is insufficient. When both sound source information other than aerodynamic sound and flag information indicating true are assigned to an object, if there is insufficient processing capacity, priority may be given to generating the sound source, and selection may be made to not generate the aerodynamic sound. Alternatively, the flag information may include pre-set information indicating whether to prioritize generating the sound source or generating the aerodynamic sound.

Here, an example of the flow of processes performed by (an operation example of) the selector is illustrated in FIG. 3B. FIG. 3B is a flowchart of an operation example performed by a selector according to the present embodiment. First, the selector analyzes the input signal and determines whether the input signal includes flag information (S100). When considering the processing capacity or computational load of acoustic signal processing device 100 in the selecting of whether or not to generate the aerodynamic sound, information on these may be obtained in this step S100. Next, the selector determines whether to make a selection to generate the aerodynamic sound (selection of aerodynamic sound) based on the flag information or the processing capacity or computational load of the acoustic signal processing device (S110).

Selection processing of not only the aerodynamic sound but also other sounds may be executed in the selector.

Note that the first position information includes identification information for identifying the object. The flag information also includes identification information for identifying the object. The geometry information also includes identification information for identifying the object.

Assume that obtainer 110 obtains the first position information, flag information, and geometry information independently from each other. Even in this case, the identification information included in each of the first position information, flag information, and geometry information is referred to so as to identify the objects indicated by the first position information, flag information, and geometry information. For example, the objects indicated by each of the first position information, flag information, and geometry information can be here easily identified as the same vehicle 400. That is, three sets of identification information of the first position information, flag information, and geometry information obtained by obtainer 110 are referred to so as to clarify that the first position information, flag information, and geometry information are related to vehicle 400. Accordingly, the first position information, flag information, and geometry information are associated as information indicating vehicle 400.

The first position information, flag information, and geometry information may be included in metadata, control information, or header information included in the input signal. That is, acoustic signal processing device 100 (more specifically, obtainer 110) may obtain metadata, control information, or header information included in the input signal, and perform acoustic processing based on the metadata, control information, or header information. It is sufficient so long as acoustic signal processing device 100 (more specifically, obtainer 110) obtains the first position information, flag information, and geometry information; the source from which they are obtained is not limited to the input signal.

The audio content information (audio signal) included in the input signal may be subjected to encoding processing such as MPEG-H 3D Audio (ISO/IEC 23008-3) (hereinafter, referred to as MPEG-H 3D Audio). The encoding processing technology is not limited to MPEG-H 3D Audio; other known technologies may be used. Information other than the audio signal, such as the first position information, flag information, and geometry information, may be subjected to encoding processing. That is, acoustic signal processing device 100 obtains the audio signal and metadata included in the encoded bitstream. In acoustic signal processing device 100, audio content information is obtained and decoded. In the present embodiment, acoustic signal processing device 100 functions as a decoder included in a decoding device, and more specifically, functions as renderers A0203 and A0213 included in the decoder. Note that the terms "audio content information" or "sound data" in the present disclosure should be interpreted as the audio signal itself, or as information including geometry information or flag information, in accordance with the technical content.

The second position information may also be subjected to an encoding process. That is, obtainer 110 obtains and decodes the second position information.

Obtainer 110 outputs the obtained first position information and second position information to calculator 120. When obtainer 110 obtains flag information, obtainer 110 outputs the obtained flag information to generator 130 or to a selector (not illustrated). When obtainer 110 obtains geometry information, obtainer 110 outputs the obtained geometry information to calculator 120 and generator 130.

Calculator 120 calculates the moving speed of the object, the distance between the object and listener L, and the amount of wind per unit time generated when the object moves. Calculator 120 includes first calculator 121, second calculator 122, and third calculator 123.

First calculator 121 calculates the moving speed of the object in the virtual space based on the first position information obtained by obtainer 110. As described above, obtainer 110 obtains the first position information indicating the position of the object in the virtual space each time the spatial information is updated by spatial information managers A0201 and A0211. First calculator 121 calculates the moving speed of the object in the virtual space by differentiating the location of the object in the virtual space with respect to time, based on the first position information (more specifically, a plurality of items of first position information) obtained each time the spatial information is updated by spatial information managers A0201 and A0211. First calculator 121 outputs the calculated moving speed to generator 130.

Second calculator 122 calculates the distance between the object and listener L based on the first position information and the second position information obtained by obtainer 110. As described above, obtainer 110 obtains the first position information and the second position information in the virtual space each time the spatial information is updated by spatial information managers A0201 and A0211. Second calculator 122 calculates the distance between the object and listener L in the virtual space based on a plurality of items of first position information and a plurality of items of second position information obtained each time the spatial information is updated by spatial information managers A0201 and A0211. Second calculator 122 outputs the calculated distance between the object and listener L to generator 130.

When obtainer 110 has obtained geometry information, third calculator 123 calculates the amount of wind per unit time generated when the object moves, based on the moving speed calculated by first calculator 121 and the geometry information obtained by obtainer 110.

Generator 130 generates an aerodynamic sound signal indicating an aerodynamic sound generated when wind W caused by movement of the object reaches an ear of listener L, based on the moving speed calculated by first calculator 121 and the distance calculated by second calculator 122. Generator 130 outputs the generated aerodynamic sound signal to outputter 140.

Outputter 140 outputs the aerodynamic sound signal generated by generator 130. Here, outputter 140 outputs the aerodynamic sound signal to headphones 200. This allows headphones 200 to reproduce the aerodynamic sound indicated by the output aerodynamic sound signal.

Storage 150 is a storage device that stores computer programs to be executed by obtainer 110, calculator 120, generator 130, outputter 140, or other elements.

Here, the geometry information according to the present embodiment will be described again. The geometry information indicates the shape of the object (i.e., vehicle 400), and is used for generating a video of the object in the virtual space. That is, the geometry information is also used for generating a content (for example, a video) to be displayed on display 300.

Obtainer 110 outputs the obtained geometry information to display 300 as well. Display 300 obtains the geometry information output by obtainer 110. Display 300 further obtains attribute information indicating an attribute (for example, the color), other than the shape, of the object (i.e., vehicle 400) in the virtual space. Display 300 may directly obtain the attribute information from a device (e.g., server device 500) other than acoustic signal processing device 100, or may obtain the attribute information from acoustic signal processing device 100. Display 300 generates content (for example, a video) based on the obtained geometry information and attribute information, and displays the content.

Next, Operation Examples 1 to 5 of an acoustic signal processing method performed by acoustic signal processing device 100 will be described.

Operation Example 1

FIG. 4 is a flowchart of Operation Example 1 performed by acoustic signal processing device 100 according to the present embodiment.

First, obtainer 110 obtains first position information indicating a position of an object that is a moving object in a virtual space, second position information indicating a position of listener L in the virtual space, and flag information indicating whether the object generates an aerodynamic sound (S10). Note that this step S10 corresponds to the "obtaining" step.

In Operation Example 1, since geometry information is not used, obtainer 110 does not obtain geometry information in step S10.

Obtainer 110 obtains the first position information and the second position information continuously, more specifically, each time the spatial information is updated by spatial information managers A0201 and A0211. That is, obtainer 110 repeats the process of obtaining the first position information and the second position information each time the spatial information is updated by spatial information managers A0201 and A0211. Obtainer 110 outputs the first position information and the second position information to calculator 120 each time the first position information and the second position information are obtained, or obtains a certain number of items of the first position information and the second position information and then outputs the certain number of items of the first position information and the certain number of items of the second position information collectively to calculator 120. That is, obtainer 110 outputs a plurality of items of first position information and a plurality of items of second position information to calculator 120. Obtainer 110 outputs the obtained flag information to generator 130 or to a selector (not illustrated).

Next, calculator 120 (more specifically, first calculator 121) calculates the moving speed of the object in the virtual space based on the first position information obtained by obtainer 110 (S20). Note that this step S20 corresponds to the "calculating a moving speed" step. First calculator 121 outputs the calculated moving speed to generator 130.

Next, calculator 120 (more specifically, second calculator 122) calculates the distance between the object and listener L based on the first position information and the second position information obtained by obtainer 110 (S30). Note that this step S30 corresponds to the "calculating a distance" step. Second calculator 122 outputs the calculated distance to generator 130.

Next, generator 130 determines whether the flag information obtained by obtainer 110 indicates that the object generates aerodynamic sound (S40).

If the flag information indicates that the object does not generate an aerodynamic sound (No in step S40), acoustic signal processing device 100 ends the operation. If the flag information indicates that the object generates an aerodynamic sound (Yes in step S40), generator 130 generates an aerodynamic sound signal (S50). More specifically, generator 130 generates an aerodynamic sound signal indicating an aerodynamic sound generated when wind W caused by movement of the object reaches an ear of listener L, based on the moving speed calculated by first calculator 121 and the distance calculated by second calculator 122. Note that this step S50 corresponds to the "generating" step.

Outputter 140 outputs the aerodynamic sound signal generated by generator 130 (S60). Note that step S60 corresponds to "outputting". Here, outputter 140 outputs the aerodynamic sound signal to headphones 200. This allows headphones 200 to reproduce the aerodynamic sound indicated by the output aerodynamic sound signal.

Next, a first example and second example of methods for generator 130 to generate the aerodynamic sound signal in step S50 will be given.

First Example

First, the first example will be described. In the first example, in addition to aerodynamic sound data, generator 130 generates the aerodynamic sound signal based on the moving speed and the distance.

FIG. 5 and FIG. 6 are flowcharts illustrating a first example of a method for generator 130 to generate the aerodynamic sound signal in step S50 illustrated in FIG. 4.

As illustrated in FIG. 5, when generator 130 generates the aerodynamic sound signal using the method of the first example, aerodynamic sound data is stored in storage 150 (S70) before step S10. After steps S10 to S40 are performed as described above, as illustrated in FIG. 6, generator 130 generates the aerodynamic sound signal based on the aerodynamic sound data stored in storage 150, the moving speed calculated by first calculator 121, and the distance calculated by second calculator 122 (S51).

More specifically, in step S51, generator 130 first obtains the aerodynamic sound data stored in storage 150 (S511).

The aerodynamic sound data is data of a recording of sound resulting from wind W reaching a human ear or a model simulating the human ear. In this operation example, the aerodynamic sound data is data of a recording of sound resulting from wind W reaching a model simulating a human ear.

Here, the aerodynamic sound data will be described with reference to FIG. 7 and FIG. 8. FIG. 7 is a schematic diagram illustrating dummy head microphone 10 for recording aerodynamic sound data according to the first example of the method in Operation Example 1. FIG. 8 is schematic diagram illustrating dummy head microphone 20 for recording aerodynamic sound data according to the first example of the method in Operation Example 1.

As illustrated in FIG. 7, dummy head microphone 10 includes dummy head 11, and microphones 12 and 13 provided at the respective ears of dummy head 11. As illustrated in FIG. 8, dummy head microphone 20 is a simplified dummy head microphone, and includes microphones provided on models of human ears. By blowing wind W from, for example, electric fan 50 to such dummy head microphones 10 and 20, dummy head microphones 10 and 20 can record the aerodynamic sound generated when wind W reaches the ears of listener L. The aerodynamic sound data is data (a sound signal) indicating this recorded aerodynamic sound.

Generator 130 generates the aerodynamic sound signal such that frequency components are shifted toward higher frequencies as the calculated moving speed increases, and the loudness of the aerodynamic sound increases as the calculated distance decreases (S512). Stated differently, the generated aerodynamic sound signal is a signal in which frequency components are shifted toward higher frequencies as the calculated moving speed increases, and which increases the loudness of the aerodynamic sound as the calculated distance decreases.

More specifically, generator 130 generates an aerodynamic sound signal in which frequency components are shifted toward higher frequencies as the moving speed calculated by first calculator 121 increases, based on the aerodynamic sound data. Here, generator 130 generates an aerodynamic sound signal in which frequency components included in the aerodynamic sound data are shifted toward higher frequencies as the moving speed increases. For example, generator 130 shifts the frequency toward higher frequencies by multiplying the frequency of a frequency component by a value corresponding to the moving speed.

Furthermore, generator 130 generates the aerodynamic sound signal such that the loudness of the aerodynamic sound increases as the distance calculated by second calculator 122 decreases, based on the aerodynamic sound data. For example, a predetermined distance is stored in storage 150, and generator 130 generates the aerodynamic sound signal such that the loudness of the aerodynamic sound increases as the calculated distance becomes smaller than the predetermined distance, and the loudness of the aerodynamic sound decreases as the calculated distance becomes larger than the predetermined distance. For example, generator 130 generates the aerodynamic sound signal such that the loudness of the aerodynamic sound attenuates according to the a-th power of the distance (where a is a constant).

Although generator 130 performs both the above-described processing of shifting frequency components toward higher frequencies and the above-described processing of increasing the loudness of the aerodynamic sound in the first example, generator 130 may perform at least one of these processes.

In the first example, the aerodynamic sound data was data of a recording of sound resulting from wind W reaching a model simulating a human ear, but it may also be data of a recording of sound resulting from wind W reaching an actual human ear. In such cases, microphones are provided at both of a person's ears, and by blowing wind W from, for example, electric fan 50, the microphones can record the aerodynamic sound generated when wind W reaches the ears of listener L. The aerodynamic sound data is data (a sound signal) indicating this recorded aerodynamic sound.

Second Example

Next, a second example of a method for generator 130 to generate the aerodynamic sound signal will be described.

FIG. 9 is a flowchart illustrating a second example of a method for generator 130 to generate the aerodynamic sound signal in step S50 illustrated in FIG. 4.

After step S40 is performed as described above, as illustrated in FIG. 9, generator 130 generates the aerodynamic sound signal (S52). Here, generator 130 generates the aerodynamic sound signal based on the moving speed calculated by first calculator 121, the distance calculated by second calculator 122, and the shape of a human ear.

More specifically, in step S52, first, generator 130 generates a processed signal based on the moving speed calculated by first calculator 121 and the shape of a human ear (S521).

In this step S521, the following processing is performed. Generator 130 processes the noise signal with each of a plurality of band-emphasis filters, and for each noise signal processed by a respective band-emphasis filter, multiplies the noise signal by a predetermined coefficient corresponding to that band-emphasis filter (S521a). Generator 130 then synthesizes the plurality of noise signals, each multiplied by a predetermined coefficient, to generate a processed signal (S521b).

FIG. 10A illustrates the process of generating the aerodynamic sound signal using generator 130 according to the second example of the method in Operation Example 1.

As described above, wind W is generated when an object moves in the virtual space. As illustrated in FIG. 10A, aerodynamic sound is generated when the generated wind W reaches a person's ear. More specifically, when the generated wind W reaches a person's ear, a vortex of air (Kármán vortex) is generated, and this Kármán vortex causes aerodynamic sound to occur. Here, considering a person's ear as an aggregate of depressions having a plurality of widths (for example, first width d1, second width d2, third width d3, and fourth width d4), generator 130 generates the aerodynamic sound signal by applying a cavity sound generation model. The Kármán vortex frequency at a location corresponding to, for example, first width d1 of a person's ear is represented by f1 and satisfies Equation (1).

$$f1 = (St \times v) \div d1 \dots (1)$$

Similarly, the Kármán vortex frequencies at locations corresponding to second width d2, third width d3, and fourth width d4 of a person's ear are represented by f2, f3, and f4, respectively, and satisfy Equations (2), (3), and (4), respectively.

$$f2 = (St \times v) \div d2 \dots (2)$$

$$f3 = (St \times v) \div d3 \dots (3)$$

$$f4 = (St \times v) \div d4 \dots (4)$$

For example, the size of an average person's ear may be used for each of the first to fourth widths d1 to d4, and values of, for example, greater than or equal to 0 cm and less than or equal to 3 cm may be used. In other words, the ear illustrated in FIG. 10A is also modeled after the ear of an average person. Note that the moving speed of the object calculated by first calculator 121 can be regarded as velocity v (m/s) of wind W caused by the movement of the object.

Furthermore, St represents the Strouhal number, and in the cavity sound generation model, it is approximately 0.4, for example. The Kármán vortex frequency corresponds to the frequency of an aerodynamic sound. Generator 130 calculates f1 to f4, i.e., the Kármán vortex frequencies, in accordance with Equations (1) to (4). Generator 130 generates the processed signal by processing the noise signal using four band pass filters having f1 to f4 as their respective center frequencies.

The first to fourth widths d1 to d4 illustrated in FIG. 10A indicate the widths when wind W arrives from the front of listener L. Here, a case where wind W arrives from a direction other than the front of listener L will be described with reference to FIG. 10B.

FIG. 10B is another figure illustrating the process of generating the aerodynamic sound signal using the generator according to the second example of the method in Operation Example 1. More specifically, FIG. 10B illustrates a case where wind W arrives from a direction 45 degrees diagonally upward from listener L. In this case, as illustrated in FIG. 10B, the width apparently varies according to that angle, so it is obvious that the frequency characteristic varies accordingly.

FIG. 11 illustrates one example of four band pass filters and their processing according to the second example of the method in Operation Example 1. The four band pass filters are filters that pass frequency components having f1 to f4 as center frequencies, and are one example of band-emphasis filters for simulating aerodynamic sound caused by the shape of the ears of listener L.

Generator 130 extracts the frequency components of the four band pass filters illustrated in FIG. 11 from the noise signal and synthesizes them to thereby generate the processed signal. Note that the center frequency is the peak frequency of the gain of the band pass filter. In the second example, a white noise signal or a pink noise signal or the like may be used as the noise signal input to each of the four band pass filters.

Here, each output signal output from the four band pass filters may be multiplied by a predetermined coefficient corresponding to the center frequency of that output signal. Note that the output signal means the processed noise signal. The predetermined multiplier may be a value that increases with a decrease in center frequency. This is because in the typical frequency band of aerodynamic sound (for example, approximately 5 kHz or less), the lower the frequency, the lower the loudness perceived by listener L. The predetermined multiplier is a value defined per band pass filter (per band-emphasis filter), and is used to multiply the noise signal processed by the corresponding band pass filter.

Each of the four band pass filters (band-emphasis filters) may have characteristics that vary according to the speed of wind W reaching the ears of listener L, and may have characteristics that vary according to the direction of wind W reaching the ears of listener L.

Furthermore, as illustrated in FIG. 9, generator 130 generates the aerodynamic sound signal such that frequency components are shifted toward higher frequencies as the calculated moving speed increases, and the loudness of the aerodynamic sound increases as the calculated distance decreases (S512).

In the second example as well, generator 130 generates an aerodynamic sound signal in which frequency components included in the synthesized processed signal are shifted toward higher frequencies as the moving speed increases. Generator 130 generates the aerodynamic sound signal such that the loudness of the aerodynamic sound increases as the distance calculated by second calculator 122 decreases. That is, in the second example, processing is performed using the processed signal instead of the aerodynamic sound data used in the first example. Although generator 130 performs both the above-described processing of shifting frequency components toward higher frequencies and the above-described processing of increasing the loudness of the aerodynamic sound in the second example, generator 130 may perform at least one of these processes.

Although an example in which the cavity sound generation model is applied to a human ear is given above, the application is not limited to this example. FIG. 12 and FIG. 13 are other figures illustrating the process of generating the processed signal using generator 130 according to the second example of the method in Operation Example 1.

Generator 130 may generate the processed signal by considering the human ear as a single cylindrical shape, as illustrated in FIG. 12. In such cases, the frequency of the Kármán vortex (Kármán vortex frequency) generated by the ear with size d5 is represented by f5 and satisfies Equation (5).

$$f5 = (St \times v) \div d5 \dots (5)$$

St, which is the Strouhal number, is approximately 0.2 in this model, for example. Generator 130 then generates the processed signal by processing the noise signal using band pass filter having f5 as the center frequency, in the same manner as described above.

Generator 130 may generate the processed signal by considering the human head as a single cylindrical shape, as illustrated in FIG. 13. In such cases, the frequency of the Kármán vortex (Kármán vortex frequency) generated by the head with size d6 is represented by f6 and satisfies Equation (6).

$$f6 = (St \times v) \div d6 \dots (6)$$

St, which is the Strouhal number, is approximately 0.2 in this model, for example. Generator 130 then generates the processed signal by processing the noise signal using band pass filter having f6 as the center frequency, in the same manner as described above. The band pass filter is a filter for simulating aerodynamic sound caused by the shape of the head of listener L.

In this manner, generator 130 generates the aerodynamic sound signal using the methods of the first example and the second example, and outputs it to outputter 140.

The processing in step S60 is then performed.

Operation Example 2

Next, Operation Example 2 will be described.

FIG. 14 is a flowchart of Operation Example 2 performed by acoustic signal processing device 100 according to the present embodiment. The following description will focus on the differences from Operation Example 1, and description of points in common will be omitted or simplified.

First, obtainer 110 obtains first position information indicating a position of an object that is a moving object in a virtual space, second position information indicating a position of listener L in the virtual space, and geometry information indicating the shape of the object (S10a).

In Operation Example 2, since flag information is not used, obtainer 110 does not obtain flag information in step S10a.

As in Operation Example 1, obtainer 110 obtains the first position information and the second position information continuously, more specifically, each time the spatial information is updated by spatial information managers A0201 and A0211.

Next, steps S20 and S30 are performed.

Next, generator 130 generates the aerodynamic sound signal based on the shape indicated by the geometry information obtained by obtainer 110, the moving speed calculated by first calculator 121, and the distance calculated by second calculator 122 (50a).

In step S50a, generator 130 first obtains the aerodynamic sound data stored in storage 150 (S511).

Generator 130 generates the aerodynamic sound signal such that frequency components are shifted toward higher frequencies as the moving speed increases, the loudness of the aerodynamic sound increases as the distance decreases, and the loudness of the aerodynamic sound increases as the spatial volume of the object increases (S512a). Stated differently, the generated aerodynamic sound signal is a signal in which frequency components are shifted toward higher frequencies as the calculated moving speed increases, which increases the loudness of the aerodynamic sound as the calculated distance decreases, and which increases the loudness of the aerodynamic sound as the spatial volume of the object increases. Note that the spatial volume of the object is calculated based on the shape indicated by the geometry information.

In Operation Example 2, generator 130 performs all of the above-described processing of shifting frequency components toward higher frequencies, the above-described processing of increasing the loudness of the aerodynamic sound according to the distance, and the above-described processing of increasing the loudness of the aerodynamic sound according to the spatial volume of the object; however, generator 130 may perform at least one of these processes. Note that the above-described processing for increasing the loudness of the aerodynamic sound according to the spatial volume of the object may be performed as follows. For example, a predetermined spatial volume is stored in storage 150, and generator 130 generates the aerodynamic sound signal such that the loudness of the aerodynamic sound increases as the spatial volume of the object becomes larger than the predetermined spatial volume, and the loudness of the aerodynamic sound decreases as the spatial volume of the object becomes smaller than the predetermined spatial volume.

Furthermore, outputter 140 outputs the aerodynamic sound signal generated by generator 130 (S60).

Note that in Operation Example 2 illustrated in FIG. 14, the aerodynamic sound signal is generated using the aerodynamic sound data of the first example method shown in Operation Example 1, but the method is not limited to this example. In Operation Example 2, the aerodynamic sound signal may be generated using the processed signal of the second example method shown in Operation Example 1.

Operation Example 3

Next, Operation Example 3 will be described.

FIG. 15 is a flowchart of Operation Example 3 performed by acoustic signal processing device 100 according to the present embodiment. The following description will focus on the differences from Operation Example 2, and description of points in common will be omitted or simplified.

In Operation Example 3, steps S10a, S20, and S30 are performed in the same manner as in Operation Example 2.

Next, calculator 120 (more specifically, third calculator 123) calculates the amount of wind per unit time generated when the object moves, based on the moving speed calculated by first calculator 121 and the geometry information obtained by obtainer 110 (S35).

Here, the amount of wind refers to the quantity of air that moves as a result of the movement of the object. For example, storage 150 stores wind amount data indicating the moving speed of the object, the shape of the object, and the amount of wind associated with the moving speed and the shape. Third calculator 123 may calculate the amount of wind by referencing the wind amount data stored in storage 150, based on the moving speed and shape.

Next, generator 130 generates the aerodynamic sound signal based on the moving speed calculated by first calculator 121, the distance calculated by second calculator 122, and the amount of wind calculated by third calculator 123 (50b).

In step S50b, generator 130 first obtains the aerodynamic sound data stored in storage 150 (S511).

Generator 130 generates the aerodynamic sound signal such that frequency components are shifted toward higher frequencies as the moving speed increases, the loudness of the aerodynamic sound increases as the distance decreases, and the loudness of the aerodynamic sound increases as the amount of wind increases (S512b). Stated differently, the generated aerodynamic sound signal is a signal in which frequency components are shifted toward higher frequencies as the calculated moving speed increases, which increases the loudness of the aerodynamic sound as the calculated distance decreases, and which increases the loudness of the aerodynamic sound as the amount of wind increases.

In Operation Example 3, generator 130 performs all of the above-described processing of shifting frequency components toward higher frequencies, the above-described processing of increasing the loudness of the aerodynamic sound according to the distance, and the above-described processing of increasing the loudness of the aerodynamic sound according to the amount of wind; however, generator 130 may perform at least one of these processes. Note that the above-described processing for increasing the loudness of the aerodynamic sound according to the amount of wind may be performed as follows. For example, a predetermined amount of wind is stored in storage 150, and generator 130 generates the aerodynamic sound signal such that the loudness of the aerodynamic sound increases as the calculated amount of wind becomes larger than the predetermined amount of wind, and the loudness of the aerodynamic sound decreases as the calculated amount of wind becomes smaller than the predetermined amount of wind.

Furthermore, outputter 140 outputs the aerodynamic sound signal generated by generator 130 (S60).

Operation Example 4

Next, Operation Example 4 will be described.

In Operation Example 3, in step S35, the amount of wind per unit time generated when the object moves is calculated using the wind amount data, but the method is not limited to this example.

In Operation Example 4, an example is described in which processing is performed according to the moving direction (direction of travel) of the object in the virtual space.

FIG. 16 is a flowchart of Operation Example 4 performed by acoustic signal processing device 100 according to the present embodiment. The following description will focus on the differences from Operation Example 3, and description of points in common will be omitted or simplified.

In Operation Example 4, steps S10a, S20, and S30 are performed in the same manner as in Operation Example 3.

Next, step S35 is performed. The processing performed in step S35 will be described in greater detail below.

In this operation example, the object is aircraft 700. FIG. 17 illustrates aircraft 700, which is an object related to Operation Example 4 performed by the acoustic signal processing device according to the present embodiment. In this manner, when the object is aircraft 700, the geometry information indicates the moving direction of the object. In FIG. 17, the moving direction (direction of travel) of the object (aircraft 700) is perpendicular to the page surface and toward the viewer of the page.

In such cases, in step S35, as a more detailed process, the following processing is performed. Third calculator 123 calculates the amount of wind based on the surface area of the object viewed from the moving direction of the object indicated in the geometry information obtained by obtainer 110, and the moving speed calculated by first calculator 121 (S35c).

The surface area refers to the area enclosed by the outline of the object when viewing the object, which is aircraft 700, from the moving direction (direction of travel) of the object. The surface area refers to, for example, the area occupied by aircraft 700 illustrated in FIG. 17.

In step S35c, third calculator 123 calculates the amount of wind by multiplying the surface area of the object by the moving speed. More specifically, third calculator 123 may calculate the amount of wind by multiplying the surface area of the object, the moving speed, and a predetermined constant.

As illustrated in FIG. 16, steps S50b and S60 are performed.

In this operation example, aircraft 700 is used as the object, but the object is not limited to this example. The processing of this operation example can be applied when an object whose moving direction (direction of travel) is obvious, or an object whose geometry information indicates the moving direction (direction of travel), is used.

Operation Example 5

Next, Operation Example 5 will be described.

First, the object in Operation Example 5 will be described.

FIG. 18 illustrates fan 800, which is an object related to Operation Example 5 performed by the acoustic signal processing device according to the present embodiment. Unlike aircraft 700 of Operation Example 4, fan 800 does not have an obvious moving direction, and the moving direction of fan 800 is, for example, at least one of the up-down direction, left-right direction, and front-back direction relative to the page surface of FIG. 18.

Thus, when an object whose moving direction is not obvious is used, it is difficult to perform the processing of Operation Example 4. Operation Example 5 describes an example of calculating the amount of wind per unit time generated when the object moves, even in such cases.

FIG. 19 is a flowchart of Operation Example 5 performed by acoustic signal processing device 100 according to the present embodiment. The following description will focus on the differences from Operation Example 3, and description of points in common will be omitted or simplified.

In Operation Example 5, step S10a is performed in the same manner as in Operation Example 3.

Next, first calculator 121 calculates the moving speed and moving direction of the object based on the first position information obtained by obtainer 110 (S20e). As described above, obtainer 110 obtains the first position information indicating the position of the object in the virtual space each time the spatial information is updated by spatial information managers A0201 and A0211. First calculator 121 calculates the moving direction of the object in the virtual space from the difference between one item of first position information and one item of first position information obtained after the spatial information is updated by spatial information managers A0201 and A0211.

Next, step S30 is performed.

Next, third calculator 123 calculates the amount of wind per unit time generated when the object moves, based on the geometry information obtained by obtainer 110, the moving direction calculated by first calculator 121, and the calculated moving speed (S35e).

In step S35e, first, third calculator 123 calculates the surface area of the object as viewed from the moving direction of the object, based on the geometry information and the moving direction. Note that the object, which is fan 800, includes handle 801 and fan surface 802. Consider a case where fan 800 moves in the up-down direction (hereinafter referred to as the first direction), the left-right direction (hereinafter referred to as the second direction), and the front-back direction (hereinafter referred to as the third direction) relative to the page surface. Note that the first direction is a direction parallel to fan surface 802 and is the direction in which handle 801 extends. The second direction is a direction parallel to fan surface 802 and perpendicular to the first direction. The third direction is a direction perpendicular to fan surface 802. As illustrated in FIG. 18, this fan 800 is a fan that is thin in the third direction.

When the moving direction of fan 800 is the first direction, the surface area of the object as viewed from the moving direction is hereinafter referred to as the first surface area. When the moving direction of fan 800 is the second direction, the surface area of the object as viewed from the moving direction is hereinafter referred to as the second surface area. When the moving direction of fan 800 is the third direction, the surface area of the object as viewed from the moving direction is hereinafter referred to as the third surface area. Since fan 800 is thin in the third direction, the first surface area and the second surface area are very small values compared to the third surface area.

Furthermore, in step S35e, third calculator 123 calculates the amount of wind based on the surface area of the object as viewed from the moving direction of the object, and the moving speed. For example, as in step S35 of Operation Example 4, third calculator 123 may calculate the amount of wind by multiplying the surface area of the object, the moving speed, and a predetermined constant.

For example, in this operation example, since the first surface area and the second surface area are very small values compared to the third surface area, the amount of wind when the moving direction of fan 800 is the third direction is greater than when the moving direction of fan 800 is the first direction or the second direction.

As illustrated in FIG. 19, steps S50b and S60 are performed.

Next, the pipeline processing will be described.

The processing performed by calculator 120, generator 130, and selector described above may be carried out as part of pipeline processing as described in, for example, PTL 2. FIG. 20 illustrates one example of a functional block diagram and steps for explaining a case where renderers A0203 and A0213 of FIG. 2G and FIG. 2H perform pipeline processing. Renderer 900, which is one example of renderers A0203 and A0213 of FIG. 2G and FIG. 2H, will be used for the explanation of FIG. 20.

Pipeline processing refers to dividing the processing for applying sound effects into a plurality of processes and executing each process one by one in order. The divided processes include, for example, signal processing on the audio signal, generation of parameters used for signal processing, etc.

Renderer 900 according to the present embodiment includes, as pipeline processing, processes that apply effects such as reverberation effect, early reflections, distance attenuation effect, and binaural processing. However, the above-described processing is one example, and may include other processes, or may omit some of the processes. For example, renderer 900 may include diffraction processing or occlusion processing as pipeline processing, or reverberation processing may be omitted if it is unnecessary. Each process may be expressed as a stage, and the audio signals such as reflected sounds generated as a result of each process may be expressed as rendering items. The order of each stage in the pipeline processing and the stages included in the pipeline processing are not limited to the example illustrated in FIG. 20.

Note that renderer 900 need not include all stages illustrated in FIG. 20, and some stages may be omitted or other stages may be outside of renderer 900.

As one example of pipeline processing, processing performed in each of reverberation processing, early reflection processing, distance attenuation processing, selection processing, generation processing, and binaural processing will be described. In each processing, the metadata included in the input signal is analyzed, and parameters necessary for generating reflected sounds are calculated.

In FIG. 20, renderer 900 includes reverberation processor 901, early reflection processor 902, distance attenuation processor 903, selector 904, calculator 120, generator 130, and binaural processor 905. Here, an example will be described in which reverberation processor 901 performs a reverberation processing step, early reflection processor 902 performs an early reflection processing step, distance attenuation processor 903 performs a distance attenuation processing step, selector 904 performs a selection processing step, and binaural processor 905 performs a binaural processing step.

In the reverberation processing step, reverberation processor 901 generates an audio signal indicating reverberation sound or parameters necessary for generating the audio signal. Reverberation sound is a sound that includes reverberation sound reaching the listener as reverberation after the direct sound. As one example, the reverberation sound is reverberation sound that reaches the listener at a relatively late stage (for example, approximately 100 to 200 ms after the arrival of the direct sound) after the early reflected sound (to be described later) reaches the listener, and after undergoing more reflections (for example, several tens of times) than the early reflected sound. Reverberation processor 901 refers to the audio signal and spatial information included in the input signal, and performs calculations using a prepared, predetermined function for generating reverberation sound.

Reverberation processor 901 may generate reverberation by applying a known reverberation generation method to the sound signal. One example of a known reverberation generation method is the Schroeder method, but the method used is not limited to this example. Reverberation processor 901 uses the shape and an acoustic property of a sound reproduction space indicated by the spatial information when the known reverberation generation processing is applied. Accordingly, reverberation processor 901 can calculate parameters for generating an audio signal that indicates reverberation.

In the early reflection processing step, early reflection processor 902 calculates parameters for generating early reflection sounds based on the spatial information. The early reflected sound is reflected sound that reaches the listener at a relatively early stage (for example, approximately several tens of ms after the arrival of the direct sound) after the direct sound from the sound source object reaches the listener, and after undergoing one or more reflections. Early reflection processor 902 references, for example, the sound signal and metadata, and calculates the path of reflected sound that reaches the listener after being reflected by objects, using the shape and size of the three-dimensional sound field (space), the positions of objects such as structures, and the reflectance of objects, from the sound source object. Early reflection processor 902 may calculate the path of the direct sound. The information of said path may be used as a parameter for generating the early reflected sound, as well as a parameter for selection processing of reflected sound in selector 904.

In the distance attenuation processing step, distance attenuation processor 903 calculates the loudness of sound reaching the listener based on the difference between the length of the direct sound path and the length of the reflected sound path calculated by early reflection processor 902. The loudness of sound reaching the listener attenuates in proportion to the distance to the listener (inversely proportional to the distance) relative to the loudness of the sound source. Therefore, the loudness of the direct sound can be obtained by dividing the loudness of the sound source by the length of the direct sound path, and the loudness of the reflected sound can be calculated by dividing the loudness of the sound source by the length of the reflected sound path.

In the selection processing step, selector 904 selects the aerodynamic sound or reflected sound to be generated. The selection processing may be executed based on parameters calculated in previous steps.

When the selection processing is executed as part of the pipeline processing, reflected sounds that were not selected in the selection processing need not be subjected to processing subsequent to the selection processing in the pipeline processing. Not executing processing subsequent to the selection processing for reflected sounds that were not selected enables a reduction in the computational load of acoustic signal processing device 100 more so than when it is decided to only not execute binaural processing for the reflected sounds that were not selected.

When the selection processing described in the present embodiment is executed as part of the pipeline processing, if the selection processing is set to be executed earlier in the order of the plurality of processes in the pipeline processing, more processing subsequent to the selection processing can be omitted, thereby enabling a greater reduction in the amount of computation. For example, if the selection processing is executed in an prior to the processing by calculator 120 and generator 130, processing for aerodynamic sound related to objects determined not to be selected can be omitted, enabling a further reduction in the amount of computation in acoustic signal processing device 100.

Parameters calculated as part of the pipeline processing for generating rendering items may be used by selector 904 or calculator 120.

In the binaural processing step, binaural processor 905 performs signal processing on the audio signal of the direct sound so that it is perceived as sound reaching the listener from the direction of the sound source object. Furthermore, binaural processor 905 performs signal processing so that the reflected sound is perceived as sound reaching the listener from the obstacle object involved in the reflection. Based on the coordinates and orientation of the listener in the sound space (i.e., the position and orientation of the listening point), processing is executed to apply an HRIR (Head-Related Impulse Response) DB (Database) so that sound reaches the listener from the position of the sound source object or the position of the obstacle object. The position and direction of the listening point may be changed according to the movement of the listener's head, for example. Information indicating the position of the listener may be obtained from a sensor.

The program used for pipeline processing and binaural processing, spatial information necessary for acoustic processing, the HRIR DB, and other parameters such as threshold data are obtained from memory included in acoustic signal processing device 100 or from an external source. Head-Related Impulse Response (HRIR) is the response characteristic when one impulse is generated. Stated differently, HRIR is the response characteristic that is converted from an expression in the frequency domain to an expression in the time domain by Fourier transforming the head-related transfer function, which represents the change in sound caused by surrounding objects including the auricle, the head, and the shoulders as a transfer function. The HRIR DB is a database including such information.

As one example of pipeline processing, renderer 900 may include a processor (not illustrated). For example, renderer 900 may include a diffraction processor or an occlusion processor.

The diffraction processor executes processing to generate an audio signal indicating sound including diffracted sound caused by an obstacle between the listener and the sound source object in a three-dimensional sound field (space). Diffracted sound is sound that, when there is an obstacle between the sound source object and the listener, reaches the listener from the sound source object by going around the obstacle.

The diffraction processor references, for example, the sound signal and metadata, and calculates the path by which sound reaches the listener from the sound source object by detouring around the obstacle, using the position of the sound source object in the three-dimensional sound field (space), the position of the listener, and the position, shape, and size of the obstacle, etc., and generates diffracted sound based on the calculated path.

The occlusion processor generates an audio signal that seeps through when a sound source object is on the other side of an obstacle object, based on spatial information obtained in any step and information such as the material of the obstacle object.

In the above embodiment, the position information assigned to the sound source object is defined as a "point" in the virtual space, and the details of the invention are described as being a so-called "point sound source". However, as a method for defining a sound source in the virtual space, a spatially extended sound source that is not a point sound source may be defined as an object having length, size, or shape. In such cases, since the distance between the listener and the sound source or the direction of sound arrival is not determined, the resulting reflected sound may be limited to the "selected" processing by selector 904 mentioned above, without analysis being performed, or regardless of the analysis results. This is because by doing so, it is possible to avoid the sound quality degradation that might occur by not selecting the reflected sound. Alternatively, a representative point such as the center of gravity of the object may be determined, and the processing of the present disclosure may be applied as if sound is generated from that representative point. In such cases, the processing of the present disclosure may be applied after adjusting a threshold in accordance with the information on the spatial extension of the sound source.

Next, an example structure of the bitstream will be described.

The bitstream includes, for example, an audio signal and metadata. The audio signal is sound data representing sound, indicating information such as the frequency and intensity of the sound. The spatial information included in the metadata is information related to the space in which the listener of the sound that is based on the audio signal is positioned. More specifically, the spatial information is information about a predetermined position (localization position) in the sound space (for example, within a three-dimensional sound field) when localizing the sound image of the sound at that predetermined position, that is, when causing the listener to perceive the sound as reaching from a predetermined direction. The spatial information includes, for example, sound source object information and position information indicating the position of the listener.

The sound source object information is information about an object indicating a physical object that generates sound based on the audio signal, i.e., reproduces the audio signal, and is information related to a virtual object (sound source object) placed in a sound space, which is a virtual space corresponding to the real-world space in which the physical object is placed. The sound source object information includes, for example, information indicating the position of the sound source object located in the sound space, information about the orientation of the sound source object, information about the directivity of the sound emitted by the sound source object, information indicating whether the sound source object belongs to an animate thing, and information indicating whether the sound source object is a mobile body. For example, the audio signal corresponds to one or more sound source objects indicated by the sound source object information.

As one example of the data structure of the bitstream, the bitstream includes, for example, metadata (control information) and an audio signal.

The audio signal and metadata may be stored in a single bitstream or may be separately stored in plural bitstreams. Similarly, the audio signal and metadata may be stored in a single file or may be separately stored in plural files.

The bitstream may exist for each sound source or may exist for each playback time. When bitstreams exist for each playback time, a plurality of bitstreams may be processed in parallel simultaneously.

Metadata may be assigned to each bitstream, or may be collectively assigned as information for controlling a plurality of bitstreams. The metadata may be assigned for each playback time.

When the audio signal and metadata are stored separately in a plurality of bitstreams or a plurality of files, information indicating another bitstream or file relevant to one or some of the bitstreams or files may be included, or information indicating another bitstream or file relevant to each of all the bitstreams or files may be included. Here, the relevant bitstream or file is, for example, a bitstream or file that may be used simultaneously during acoustic processing. The relevant bitstream or file may include a bitstream or file that collectively describes information indicating other relevant bitstreams or files. Here, information indicating other relevant bitstreams or files is, for example, an identifier indicating the other bitstream, a file name indicating the other file, a uniform resource locator (URL), or a uniform resource identifier (URI). In such cases, obtainer 110 identifies or obtains a bitstream or file based on information indicating other relevant bitstreams or files. The bitstream may include information indicating another bitstream relevant to the bitstream as well as information indicating a bitstream or file relevant to another bitstream or file within the bitstream. Here, the file including information indicating the relevant bitstream or file may be, for example, a control file such as a manifest file used for content distribution.

Note that the entire metadata or part of the metadata may be obtained from somewhere other than a bitstream of the audio signal. For example, metadata for controlling an acoustic sound or metadata for controlling a video may be obtained from somewhere other than from a bitstream or both may be obtained from somewhere other than from a bitstream. When metadata for controlling a video is included in a bitstream obtained by the audio signal reproduction system, the audio signal reproduction system may have a function of outputting metadata that can be used for controlling a video to a display device that displays images or to a stereoscopic video reproduction device that reproduces stereoscopic videos.

Next, examples of information included in the metadata will be described further.

The metadata may be information used to describe a scene expressed in the sound space. As used herein, the term "scene" refers to a collection of all elements that represent three-dimensional video and acoustic events in the sound space, which are modeled in the audio signal reproduction system using metadata. Thus, metadata as used herein may include not only information for controlling acoustic processing, but also information for controlling video processing. Of course, the metadata may include information for controlling only acoustic processing or video processing, or may include information for use in controlling both.

The audio signal reproduction system generates virtual acoustic effects by performing acoustic processing on the audio signal using the metadata included in the bitstream and additionally obtained interactive listener position information. Although the present embodiment describes a case where early reflection processing, obstacle processing, diffraction processing, occlusion processing, and reverberation processing are performed as sound effects, other acoustic processing may be performed using the metadata. For example, the audio signal reproduction system may add acoustic effects such as distance decay effect, localization, and Doppler effect. In addition, information for switching between on and off of all or one or more of the acoustic effects, and priority information may be added as metadata.

As an example, encoded metadata includes information about a sound space including a sound source object and an obstacle object and information about a localization position when the sound image of the sound is localized at a predetermined position in the sound space (i.e., the sound is perceived as reaching from a predetermined direction). Here, an obstacle object is an object that can influence a sound emitted by a sound source object and perceived by the listener, by, for example, blocking or reflecting the sound between the sound source object and the listener. An obstacle object can include an animal such as a person or a movable body such as a machine, in addition to a stationary object. When a plurality of sound source objects are present in a sound space, another sound source object may be an obstacle object for a certain sound source object. Non-sound-emitting objects such as building materials or inanimate objects, and sound source objects that emit sound can both be obstacle objects.

The metadata includes all or part of information indicating the shape of the sound space, geometry information and position information of obstacle objects present in the sound space, geometry information and position information of sound source objects present in the sound space, and the position and orientation of the listener in the sound space.

The sound space may be either a closed space or an open space. The metadata includes information indicating the reflectance of each structure that can reflect sound in the sound space, such as floors, walls, and ceilings, and the reflectance of each obstacle object present in the sound space. Here, the reflectance is an energy ratio between a reflected sound and an incident sound, and is set for each sound frequency band. Of course, the reflectance may be uniformly set, irrespective of the sound frequency band. When the sound space is an open space, for example, parameters such as a uniformly set attenuation rate, diffracted sound, and early reflected sound may be used.

In the above description, reflectance is mentioned as a parameter with regard to an obstacle object or a sound source object included in metadata, but the metadata may include information other than reflectance. For example, information other than reflectance may include information on the material of an object as metadata related to both of a sound source object and a non-sound-emitting object. More specifically, the information other than reflectance may include parameters such as diffusivity, transmittance, and sound absorption rate.

For example, information on a sound source object may include information for designating the loudness, a radiation property (directivity), a reproduction condition, the number and types of sound sources emitted by one object, and a sound source region of an object. The reproduction condition may determine that a sound is, for example, a sound that is continuously being emitted or is emitted at an event. The sound source region in the object may be determined based on the relative relationship between the position of the listener and the position of the object, or determined with respect to the object. When the sound source region in the object is determined based on the relative relationship between the position of the listener and the position of the object, with respect to the plane along which the listener is looking at the object, the listener can be made to perceive that sound A is emitted from the right side of the object and sound B is emitted from the left side of the object as seen from the listener. When the sound source region in the object is determined based on the object as a reference, which sound is emitted from which region of the object can be fixed, irrespective of the direction in which the listener is viewing. For example, the listener can be made to perceive that high-pitched sound comes from the right side and low-pitched sound comes from the left side when looking at the object from the front. In such cases, if the listener goes around to the back of the object, the listener can be made to perceive that low-pitched sound comes from the right side and high-pitched sound comes from the left side when looking at the object from the back.

Metadata related to the space may include, for example, the time until early reflected sound, the reverberation time, and the ratio of direct sound to diffuse sound. When the ratio between a direct sound and a diffused sound is zero, the listener can be caused to perceive only a direct sound.

A summary of the present embodiment is as follows.

The acoustic signal processing method according to the present embodiment includes: obtaining first position information indicating a position of an object that is a moving object in a virtual space, and second position information indicating a position of listener L in the virtual space; calculating a moving speed of the object based on the first position information obtained; calculating a distance between object and listener L based on the first position information obtained and the second position information obtained; generating, based on the moving speed calculated and the distance calculated, an aerodynamic sound signal indicating an aerodynamic sound generated when wind W caused by movement of the object reaches an ear of listener L; and outputting the aerodynamic sound signal generated.

Accordingly, the acoustic signal processing method can generate an aerodynamic sound signal indicating an aerodynamic sound generated when wind W caused by movement of the object reaches an ear of listener L, based on the position of the object in the virtual space and the position of listener L, and output the generated aerodynamic sound signal. This aerodynamic sound signal, for example, is output to headphones 200, a loudspeaker, or any other suitable audio device, allowing listener L to listen to the aerodynamic sound. Therefore, listener L can perceive that the object is moving and experience a sense of realism. That is, the acoustic signal processing method according to one aspect of the present disclosure is capable of providing listener L with a sense of realism.

In the acoustic signal processing method according to the present embodiment, in the generating, the aerodynamic sound signal is generated such that: frequency components are shifted toward higher frequencies as the moving speed calculated increases; and a loudness of the aerodynamic sound increases as the distance calculated decreases.

Accordingly, the aerodynamic sound that listener L hears can be controlled based on the moving speed of the object and the distance between the object and listener L, allowing listener L to experience a greater sense of realism. That is, the acoustic signal processing method is capable of providing listener L with a greater sense of realism.

In the acoustic signal processing method according to the present embodiment, the obtaining includes obtaining flag information indicating whether the object generates the aerodynamic sound, and in the generating, the aerodynamic sound signal is generated on condition that the flag information obtained indicates that the object generates the aerodynamic sound.

Accordingly, the aerodynamic sound signal is generated only when the flag information indicates that the object generates the aerodynamic sound. That is, there is no need for the acoustic signal processing method to generate the aerodynamic sound signal when the flag information does not indicate that the object generates the aerodynamic sound. This can reduce the processing load for generating the aerodynamic sound in the acoustic signal processing method.

Furthermore, the aerodynamic sound signal can be generated based on the first position information, the second position information, and the flag information. That is, in the acoustic signal processing method according to the present embodiment, the aerodynamic sound signal can be generated even without any information other than the first position information, the second position information, and the flag information.

In the acoustic signal processing method according to the present embodiment, the obtaining includes obtaining geometry information indicating a shape of the object, and in the generating, the aerodynamic sound signal is generated based on the shape indicated by the geometry information obtained, the moving speed calculated, and the distance calculated.

Accordingly, since the aerodynamic sound signal is generated based on the shape of the object, the moving speed of the object, and the distance between the object and listener L, listener L can listen to a more realistic aerodynamic sound. That is, the acoustic signal processing method is capable of providing listener L with a greater sense of realism.

Furthermore, the aerodynamic sound signal can be generated based on the first position information, the second position information, and the geometry information. That is, in the acoustic signal processing method according to the present embodiment, the aerodynamic sound signal can be generated even without any information other than the first position information, the second position information, and the geometry information.

In the acoustic signal processing method according to the present embodiment, in the generating, the aerodynamic sound signal is generated such that: frequency components are shifted toward higher frequencies as the moving speed calculated increases; a loudness of the aerodynamic sound increases as the distance calculated decreases; and the loudness of the aerodynamic sound increases as a spatial volume of the object increases, based on the geometry information obtained.

Accordingly, the aerodynamic sound that listener L hears can be controlled based on the moving speed of the object, the distance between the object and listener L, and the spatial volume of the object, allowing listener L to experience a greater sense of realism. That is, the acoustic signal processing method is capable of providing listener L with a greater sense of realism.

The acoustic signal processing method according to the present embodiment includes a third calculation step of calculating an amount of wind per unit time generated when the object moves, based on the moving speed calculated and the geometry information obtained, wherein in the generating, the aerodynamic sound signal is generated based on the moving speed calculated, the distance calculated, and the amount of wind calculated.

Accordingly, since the aerodynamic sound signal is generated based on the moving speed of the object, the distance between the object and listener L, and the above-mentioned amount of wind, listener L can listen to a more realistic aerodynamic sound. That is, the acoustic signal processing method is capable of providing listener L with a greater sense of realism.

In the acoustic signal processing method according to the present embodiment, in the generating, the aerodynamic sound signal is generated such that: frequency components are shifted toward higher frequencies as the moving speed calculated increases; a loudness of the aerodynamic sound increases as the distance calculated decreases; and the loudness of the aerodynamic sound increases as the amount of wind calculated increases.

Accordingly, the aerodynamic sound that listener L hears can be controlled based on the moving speed of the object, the distance between the object and listener L, and the above-mentioned amount of wind, allowing listener L to experience a greater sense of realism. That is, the acoustic signal processing method is capable of providing listener L with a greater sense of realism.

In the acoustic signal processing method according to the present embodiment, in the generating, the aerodynamic sound signal is generated based on the moving speed calculated, the distance calculated, and a shape of a human ear.

Accordingly, since the aerodynamic sound signal is generated according to a sound generation model based on the shape of a human ear, listener L can listen to a more realistic aerodynamic sound. That is, the acoustic signal processing method is capable of providing listener L with a greater sense of realism.

By modeling an ear of an average person, the user of the virtual space (for example, the provider of content executed in the virtual space) is spared the need to prepare data indicating aerodynamic sound for the content in advance.

The acoustic signal processing method according to the present embodiment further includes: storing aerodynamic sound data of sound recorded when wind W reaches a human ear or a model simulating the human ear. In the generating, the aerodynamic sound signal is generated based on the aerodynamic sound data stored, the moving speed calculated, and the distance calculated.

Accordingly, since the aerodynamic sound signal is generated according to data of a recording of actual generated sound, listener L can listen to a more realistic aerodynamic sound. That is, the acoustic signal processing method is capable of providing listener L with a greater sense of realism.

In the acoustic signal processing method according to the present embodiment, in the calculating of the amount of wind, the amount of wind is calculated based on a surface area of the object viewed from a moving direction of the object indicated in the geometry information obtained, and the moving speed calculated.

As a result, the amount of wind is calculated based on the surface area of the object as viewed from the moving direction of the object indicated in the geometry information, and the moving speed. Since the aerodynamic sound signal is generated based on this amount of wind, the moving speed of the object, and the distance between the object and listener L, listener L can listen to a more realistic aerodynamic sound. That is, the acoustic signal processing method is capable of providing listener L with a greater sense of realism.

In the acoustic signal processing method according to the present embodiment, the calculating of the moving speed further includes calculating a moving direction of the object based on the first position information obtained, and in the calculating of the amount of wind, the amount of wind is calculated based on the geometry information obtained, the moving direction calculated, and the moving speed calculated.

Accordingly, the amount of wind is calculated based on the geometry information, moving direction, and moving speed. Since the aerodynamic sound signal is generated based on this amount of wind, the moving speed of the object, and the distance between the object and listener L, listener L can listen to a more realistic aerodynamic sound. That is, the acoustic signal processing method is capable of providing listener L with a greater sense of realism.

The acoustic signal processing method according to the present embodiment includes: processing a noise signal with each of a plurality of band-emphasis filters to generate a plurality of processed noise signals, and synthesizing the plurality of processed noise signals to generate an aerodynamic sound signal indicating an aerodynamic sound generated when wind W reaches an ear of listener L in the virtual space; and outputting the aerodynamic sound signal generated. Each of the plurality of band-emphasis filters is a filter for simulating the aerodynamic sound caused by a shape of the ear or a head of listener L.

Accordingly, the acoustic signal processing method can generate an aerodynamic sound signal indicating an aerodynamic sound generated when wind W reaches the ear of the listener L in the virtual space, and output the generated aerodynamic sound signal to listener L in the virtual space. This aerodynamic sound signal, for example, is output to headphones, a loudspeaker, or any other suitable audio device, allowing listener L to listen to the aerodynamic sound. Therefore, listener L can perceive that wind W is blowing in the virtual space and experience a sense of realism. That is, the acoustic signal processing method is capable of providing listener L with a sense of realism.

Furthermore, wind W blowing in the virtual space may be, as described above, different from wind W generated by the movement of objects, and may be wind that simulates a natural breeze or a storm blowing in the real-world space. Naturally, in this case, the position of the source of wind W is not specified, and the positional relationship between that position and the listener is also not specified. Even in this case, listener L can perceive that wind W is blowing in the virtual space and experience a sense of realism.

In the acoustic signal processing method according to the present embodiment, each of the plurality of band-emphasis filters multiplies the noise signal processed by the band-emphasis filter by a predetermined coefficient corresponding to the band-emphasis filter, and in the processing, the synthesizing is performed after the multiplying.

Accordingly, the aerodynamic sound generated by the acoustic signal processing method becomes more similar to the aerodynamic sound that listener L hears in the real-world space. Accordingly, listener L can experience a greater sense of realism. That is, the acoustic signal processing method is capable of providing listener L with a greater sense of realism.

In the acoustic signal processing method according to the present embodiment, each of the plurality of band-emphasis filters has a characteristic that varies according to a speed of wind W reaching the ear.

Accordingly, the aerodynamic sound generated by the acoustic signal processing method becomes more similar to the aerodynamic sound that listener L hears in the real-world space. Accordingly, listener L can experience a greater sense of realism. That is, the acoustic signal processing method is capable of providing listener L with a greater sense of realism.

In the acoustic signal processing method according to the present embodiment, each of the plurality of band-emphasis filters has a characteristic that varies according to a direction of wind W reaching the ear.

Accordingly, the aerodynamic sound generated by the acoustic signal processing method becomes more similar to the aerodynamic sound that listener L hears in the real-world space. Accordingly, listener L can experience a greater sense of realism. That is, the acoustic signal processing method is capable of providing listener L with a greater sense of realism.

A computer program according to the present embodiment is for causing a computer to execute the above-described acoustic signal processing method.

Accordingly, the computer can execute the acoustic signal processing method described above in accordance with the computer program.

Acoustic signal processing device 100 according to the present embodiment includes: obtainer 110 that obtains first position information indicating a position of an object that is a moving object in a virtual space, and second position information indicating a position of listener L in the virtual space; first calculator 121 that calculates a moving speed of the object based on the first position information obtained; second calculator 122 that calculates a distance between the object and listener L based on the first position information obtained and the second position information obtained; generator 130 that generates, based on the moving speed calculated and the distance calculated, an aerodynamic sound signal indicating an aerodynamic sound generated when wind W caused by movement of the object reaches an ear of listener L; and outputter 140 that outputs the aerodynamic sound signal generated.

Accordingly, the acoustic signal processing device can generate an aerodynamic sound signal indicating an aerodynamic sound generated when wind W caused by movement of the object reaches an ear of listener L, based on the position of the object in the virtual space and the position of listener L, and output the generated aerodynamic sound signal. This aerodynamic sound signal, for example, is output to headphones 200, a loudspeaker, or any other suitable audio device, allowing listener L to listen to the aerodynamic sound. Therefore, listener L can perceive that the object is moving and experience a sense of realism. That is, the acoustic signal processing device according to one aspect of the present disclosure is capable of providing listener L with a sense of realism.

Other Embodiments

While acoustic signal processing method and acoustic signal processing device 100 according to the present disclosure have been described above based on one or more embodiments, the present disclosure is not limited thereto. For example, other embodiments resulting from freely combining the elements described in the present specification or excluding some of the elements may be included as embodiments of the present disclosure. The present disclosure also encompasses variations that result from applying, to the embodiments, various modifications that may be conceived by those skilled in the art without departing from the spirit of the present disclosure, that is, within a range that does not depart from the scope of the language of the claims.

The embodiments shown below may be included in the scope of one or more aspects of the present disclosure.

(1) One or more of the elements included in acoustic signal processing device 100 may be a computer system that includes a microprocessor, a ROM, a random access memory (RAM), a hard disk unit, a display unit, a keyboard, and a mouse, for instance. A computer program is stored in the RAM or the hard disk unit. The microprocessor achieves its functionality by operating in accordance with the computer program. Here, the computer program includes a combination of instruction codes indicating instructions to a computer in order to achieve predetermined functionality.

(2) One or more of the elements included in acoustic signal processing device 100 described above may include a single system large scale integration (LSI) circuit. A system LSI circuit is ultra-multifunctional LSI circuit manufactured by integrating a plurality of processing units on a single chip, and specifically, is a computer system including a microprocessor, ROM, RAM and the like. The RAM stores a computer program. The microprocessor operates according to the computer program, thereby enabling the system LSI circuit to achieve its functionality.

(3) One or more of elements included in acoustic signal processing device 100 described above may include an IC card or a standalone module which can be attached to or detached from the device. The IC card or the module is a computer system including a microprocessor, ROM, RAM, and any other suitable elements. The IC card or the module may be included in the above-described ultra-multifunctional LSI circuit. The IC card or the module achieves its functionality by the microprocessor operating in accordance with the computer program. The IC card or the module may be tamper resistant.

(4) One or more of the elements of acoustic signal processing device 100 described above may be a computer program or digital signal stored on a non-transitory computer-readable recording medium, examples of which include a flexible disk, a hard disk, a CD-ROM, an MO, a DVD, a DVD-ROM, a DVD-RAM, a Blu-ray (registered trademark) disc (BD), semiconductor memory, and other media. Alternatively, one or more of the elements may be realized as a digital signal stored in such a recording medium. One or more of the elements of acoustic signal processing device 100 described above may be realized by transmitting the computer program or digital signal over an electrical communication line, a wireless or wired communication line, a network typified by the Internet, or via data broadcasting, for instance.

(5) The present disclosure may be a method described above. The present disclosure may be a computer program that realizes such a method using a computer or a digital signal that includes the computer program.

(6) The present disclosure may be a computer system that includes a microprocessor and memory, the memory may store the computer program, and the microprocessor may operate in accordance with the computer program.

(7) The present disclosure may be implemented by another independent computer system by recording the program or the digital signal on the recording medium and transferring it, or by transferring the program or the digital signal via the network or the like.

[Industrial Applicability]

The present disclosure is applicable to an acoustic signal processing method and an acoustic signal processing device, and is particularly applicable to acoustic systems and the like.

[Reference Signs List]

10, 20 dummy head microphone
11 dummy head
12, 13 microphone
50, 600 electric fan
100, A0001 acoustic signal processing device
110 obtainer
120 calculator
121 first calculator
122 second calculator
123 third calculator
130 generator
140 outputter
150 storage

200 headphones
201 head sensor
202 outputter
300 display
400 vehicle
500 server device
601 blade
700 aircraft
800 fan
L listener
W wind
A0000 three-dimensional sound reproduction system
A0002 audio presentation device
A0100 encoding device
A0101, A0113 input data
A0102 encoder
A0103 encoded data
A0104, A0114 memory
A0110, A0130 decoding device
A0111 audio signal
A0112 decoder
A0120 encoding device
A0121 transmitter
A0122 transmission signal
A0131 receiver
A0132 reception signal
A0200, A0210 decoder
A0201, A0211 spatial information manager
A0202 audio data decoder
A0203, A0213, 900 renderer
901 reverberation processor
902 early reflection processor
903 distance attenuation processor
904 selector
905 binaural processor

**Claims**

1. An acoustic signal processing method comprising:

obtaining first position information indicating a position of an object that is a moving object in a virtual space, and second position information indicating a position of a listener in the virtual space;
calculating a moving speed of the object based on the first position information obtained;
calculating a distance between the object and the listener based on the first position information obtained and the second position information obtained;
generating, based on the moving speed calculated and the distance calculated, an aerodynamic sound signal indicating an aerodynamic sound generated when wind caused by movement of the object reaches an ear of the listener;

and

outputting the aerodynamic sound signal generated.

2. The acoustic signal processing method according to claim 1, wherein
in the generating, the aerodynamic sound signal is generated such that:

frequency components are shifted toward higher frequencies as the moving speed calculated increases; and
a loudness of the aerodynamic sound increases as the distance calculated decreases.

3. The acoustic signal processing method according to claim 1, wherein

the obtaining includes obtaining flag information indicating whether the object generates the aerodynamic sound, and
in the generating, the aerodynamic sound signal is generated on condition that the flag information obtained indicates that the object generates the aerodynamic sound.

4. The acoustic signal processing method according to claim 1, wherein

the obtaining includes obtaining geometry information indicating a shape of the object, and
in the generating, the aerodynamic sound signal is generated based on the shape indicated by the geometry information obtained, the moving speed calculated, and the distance calculated.

5. The acoustic signal processing method according to claim 4, wherein
in the generating, the aerodynamic sound signal is generated such that:

frequency components are shifted toward higher frequencies as the moving speed calculated increases;
a loudness of the aerodynamic sound increases as the distance calculated decreases; and
the loudness of the aerodynamic sound increases as a spatial volume of the object increases, based on the geometry information obtained.

6. The acoustic signal processing method according to claim 4, further comprising:

calculating an amount of wind per unit time generated when the object moves, based on the moving speed calculated and the geometry information obtained, wherein

in the generating, the aerodynamic sound signal is generated based on the moving speed calculated, the distance calculated, and the amount of wind calculated.

7. The acoustic signal processing method according to claim 6, wherein
in the generating, the aerodynamic sound signal is generated such that:

frequency components are shifted toward higher frequencies as the moving speed calculated increases;
a loudness of the aerodynamic sound increases as the distance calculated decreases; and
the loudness of the aerodynamic sound increases as the amount of wind calculated increases.

8. The acoustic signal processing method according to claim 1, wherein
in the generating, the aerodynamic sound signal is generated based on the moving speed calculated, the distance calculated, and a shape of a human ear.

9. The acoustic signal processing method according to claim 1, further comprising:

storing aerodynamic sound data of sound recorded when wind reaches a human ear or a model simulating the human ear, wherein
in the generating, the aerodynamic sound signal is generated based on the aerodynamic sound data stored, the moving speed calculated, and the distance calculated.

10. The acoustic signal processing method according to claim 6, wherein
in the calculating of the amount of wind, the amount of wind is calculated based on a surface area of the object viewed from a moving direction of the object indicated in the geometry information obtained, and the moving speed calculated.

11. The acoustic signal processing method according to claim 6, wherein

the calculating of the moving speed further includes calculating a moving direction of the object based on the first position information obtained, and
in the calculating of the amount of wind, the amount of wind is calculated based on the geometry information obtained, the moving direction calculated, and the moving speed calculated.

12. An acoustic signal processing method comprising:

processing a noise signal with each of a plurality of band-emphasis filters to generate a plurality of processed noise signals, and synthesizing the plurality of processed noise signals to generate an aerodynamic sound signal indicating an aerodynamic sound generated when wind reaches an ear of a listener in a virtual space; and

outputting the aerodynamic sound signal generated, wherein

each of the plurality of band-emphasis filters is a filter for simulating the aerodynamic sound caused by a shape of the ear or a head of the listener.

13. The acoustic signal processing method according to claim 12, wherein

each of the plurality of band-emphasis filters multiplies the noise signal processed by the band-emphasis filter by a predetermined coefficient corresponding to the band-emphasis filter, and

in the processing, the synthesizing is performed after the multiplying.

14. The acoustic signal processing method according to claim 12, wherein
each of the plurality of band-emphasis filters has a characteristic that varies according to a speed of the wind reaching the ear.

15. The acoustic signal processing method according to claim 12, wherein
each of the plurality of band-emphasis filters has a characteristic that varies according to a direction of the wind reaching the ear.

16. A computer program for causing a computer to execute the acoustic signal processing method according to any one of claims 1 to 15.

17. An acoustic signal processing device comprising:

an obtainer that obtains first position information indicating a position of an object that is a moving object in a virtual space, and second position information indicating a position of a listener in the virtual space;
a first calculator that calculates a moving speed of the object based on the first position information obtained;
a second calculator that calculates a distance between the object and the listener based on the first position information obtained and the second position information obtained;
a generator that generates, based on the moving speed calculated and the distance calculated, an aerodynamic sound signal indicating an aerodynamic sound generated when wind caused by movement of the object reaches an ear of the listener; and
an outputter that outputs the aerodynamic sound signal generated.

**Amended claims under Art. 19.1 PCT**

1. An acoustic signal processing method comprising:

obtaining first position information indicating a position of an object that is a moving object in a virtual space, and second position information indicating a position of a listener in the virtual space;
calculating a moving speed of the object based on the first position information obtained;
calculating a distance between the object and the listener based on the first position information obtained and the second position information obtained;
generating, based on the moving speed calculated and the distance calculated, an aerodynamic sound signal indicating an aerodynamic sound generated when wind caused by movement of the object reaches an ear of the listener; and
outputting the aerodynamic sound signal generated.

2. The acoustic signal processing method according to claim 1, wherein
in the generating, the aerodynamic sound signal is generated such that:

frequency components are shifted toward higher frequencies as the moving speed calculated increases; and
a loudness of the aerodynamic sound increases as the distance calculated decreases.

3. The acoustic signal processing method according to claim 1, wherein

the obtaining includes obtaining flag information indicating whether the object generates the aerodynamic sound, and
in the generating, the aerodynamic sound signal is generated on condition that the flag information obtained indicates that the object generates the aerodynamic sound.

4. The acoustic signal processing method according to claim 1, wherein

the obtaining includes obtaining geometry information indicating a shape of the object, and

in the generating, the aerodynamic sound signal is generated based on the shape indicated by the geometry information obtained, the moving speed calculated, and the distance calculated.

**5.** The acoustic signal processing method according to claim 4, wherein
in the generating, the aerodynamic sound signal is generated such that:

frequency components are shifted toward higher frequencies as the moving speed calculated increases;
a loudness of the aerodynamic sound increases as the distance calculated decreases; and
the loudness of the aerodynamic sound increases as a spatial volume of the object increases, based on the geometry information obtained.

**6.** The acoustic signal processing method according to claim 4, further comprising:

calculating an amount of wind per unit time generated when the object moves, based on the moving speed calculated and the geometry information obtained, wherein
in the generating, the aerodynamic sound signal is generated based on the moving speed calculated, the distance calculated, and the amount of wind calculated.

**7.** The acoustic signal processing method according to claim 6, wherein
in the generating, the aerodynamic sound signal is generated such that:

frequency components are shifted toward higher frequencies as the moving speed calculated increases;
a loudness of the aerodynamic sound increases as the distance calculated decreases; and
the loudness of the aerodynamic sound increases as the amount of wind calculated increases.

**8.** The acoustic signal processing method according to claim 1, wherein
in the generating, the aerodynamic sound signal is generated based on the moving speed calculated, the distance calculated, and a shape of a human ear.

**9.** The acoustic signal processing method according to claim 1, further comprising:

storing aerodynamic sound data of sound recorded when wind reaches a human ear or a model simulating the human ear, wherein

in the generating, the aerodynamic sound signal is generated based on the aerodynamic sound data stored, the moving speed calculated, and the distance calculated.

**10.** The acoustic signal processing method according to claim 6, wherein
in the calculating of the amount of wind, the amount of wind is calculated based on a surface area of the object viewed from a moving direction of the object indicated in the geometry information obtained, and the moving speed calculated.

**11.** The acoustic signal processing method according to claim 6, wherein

the calculating of the moving speed further includes calculating a moving direction of the object based on the first position information obtained, and
in the calculating of the amount of wind, the amount of wind is calculated based on the geometry information obtained, the moving direction calculated, and the moving speed calculated.

**12.** An acoustic signal processing method comprising:

processing a noise signal with each of a plurality of band-emphasis filters to generate a plurality of processed noise signals, and synthesizing the plurality of processed noise signals to generate an aerodynamic sound signal indicating an aerodynamic sound generated when wind reaches an ear of a listener in a virtual space; and
outputting the aerodynamic sound signal generated

**13.** The acoustic signal processing method according to claim 12, wherein

each of the plurality of band-emphasis filters multiplies the noise signal processed by the band-emphasis filter by a predetermined coefficient corresponding to the band-emphasis filter, and
in the processing, the synthesizing is performed after the multiplying.

**14.** The acoustic signal processing method according to claim 12, wherein
each of the plurality of band-emphasis filters has a characteristic that varies according to a speed of the wind reaching the ear.

**15.** The acoustic signal processing method according to claim 12, wherein

each of the plurality of band-emphasis filters has a characteristic that varies according to a direction of the wind reaching the ear.

16. An acoustic signal processing device comprising:

an obtainer that obtains first position information indicating a position of an object that is a moving object in a virtual space, and second position information indicating a position of a listener in the virtual space;
a first calculator that calculates a moving speed of the object based on the first position information obtained;
a second calculator that calculates a distance between the object and the listener based on the first position information obtained and the second position information obtained;
a generator that generates, based on the moving speed calculated and the distance calculated, an aerodynamic sound signal indicating an aerodynamic sound generated when wind caused by movement of the object reaches an ear of the listener; and
an outputter that outputs the aerodynamic sound signal generated.

17. The acoustic signal processing method according to claim 12, wherein
each of output signals output from the plurality of band-emphasis filters is multiplied by a coefficient determined according to a center frequency of the band-emphasis filter that output the output signal.

18. The acoustic signal processing method according to claim 12, wherein
each of the plurality of band-emphasis filters is a filter for simulating the aerodynamic sound generated by the ear or a head of the listener.

19. The acoustic signal processing method according to claim 18, wherein
each of the plurality of band-emphasis filters is a filter for simulating the aerodynamic sound caused by a shape of the ear or a head of the listener.

20. The acoustic signal processing method according to claim 18, wherein
each of the plurality of band-emphasis filters is a filter for simulating a sound characteristic observed when wind interacts with a model of an ear or a head.

21. A computer program for causing a computer to execute the acoustic signal processing method according to any one of claims 1 to 15 and 18 to 21.

# FIG. 1

## FIG. 2A

A0000

Three-dimensional sound reproduction system

Acoustic signal processing device

Audio presentation device

A0002

A0001

EP 4 557 773 A1

# FIG. 2C

A0102

A0104

Encoder

Memory

A0101

A0103

Encoding device

A0100

# FIG. 2D

A0112

A0114

Decoder

Memory

A0111

A0113

Decoding device

A0110

# FIG. 2E

# FIG. 2F

FIG. 2G

FIG. 2H

# FIG. 2I

Acoustic signal processing device

| Loudspeaker | Processor | Communication I/F |

Memory

Sensor

# FIG. 2J

Encoding device

| Processor | Communication I/F |

Memory

## FIG. 3A

Acoustic signal processing device 100

- Generator 130 → Outputter 140 → Headphones 200
  - Head sensor 201
  - Outputter 202
- Calculator 120
  - First calculator 121
  - Second calculator 122
  - Third calculator 123
- Storage 150
- Display 300
- Obtainer 110
- Server device 500

# FIG. 3B

START

Analysis of input signal    S100

Selection of aerodynamic sound    S110

END

# FIG. 4

START

S10

Obtain first position information indicating position of object, second position information indicating position of listener, and flag information indicating whether object generates aerodynamic sound

S20

Calculate moving speed of object in virtual space based on first position information

S30

Calculate distance between object and listener based on first position information and second position information

S40

Flag information indicates that object generates aerodynamic sound? — No

Yes  S50

Generate aerodynamic sound signal

S60

Output aerodynamic sound signal

END

# FIG. 5

```
        ┌─────────────┐
        │    START    │
        └─────────────┘
               │
               ▼                                        S70
┌──────────────────────────────────────────────────────┐
│              Store aerodynamic sound data              │
└──────────────────────────────────────────────────────┘
               │
               ▼
        ┌─────────────┐
        │     S10     │
        └─────────────┘
```

FIG. 6

S50

```
┌──────────┐
│   S40    │
└──────────┘
      │ Yes
      ▼                                              S51
┌────────────────────────────────────────────────────────┐
│ Generate aerodynamic sound signal based on             │
│ aerodynamic sound data, moving speed, and distance     │
│                                               S511       │
│   ┌──────────────────────────────────────────────┐     │
│   │  Obtain aerodynamic sound data stored        │     │
│   │  in storage                                   │     │
│   └──────────────────────────────────────────────┘     │
│                      │                        S512       │
│                      ▼                                   │
│   ┌──────────────────────────────────────────────┐     │
│   │ Generate aerodynamic sound signal such that  │     │
│   │ frequency components are shifted toward       │     │
│   │ higher frequencies as moving speed increases, │     │
│   │ and loudness of aerodynamic sound increases   │     │
│   │ as distance decreases                         │     │
│   └──────────────────────────────────────────────┘     │
└────────────────────────────────────────────────────────┘
                       │
                       ▼
                ┌──────────┐
                │   S60    │
                └──────────┘
```

FIG. 7

FIG. 8

# FIG. 9

S50

S40

↓ Yes

S52

Generate aerodynamic sound signal

S521

Generate processed signal based on moving speed and shape of human ear

S521a

Process noise signal with each of band-emphasis filters, and for each noise signal processed by a respective band-emphasis filter, multiply noise signal by predetermined coefficient corresponding to that band-emphasis filter

S521b

Synthesize noise signals, each multiplied by predetermined coefficient, to generate processed signal

S512

Generate aerodynamic sound signal such that frequency components are shifted toward higher frequencies as moving speed increases, and loudness of aerodynamic sound increases as distance decreases

S60

FIG. 10A

FIG. 10B

FIG. 11

EP 4 557 773 A1

## FIG. 12

FIG. 13

d6

# FIG. 14

START

S10a

Obtain first position information indicating position of object, second position information indicating position of listener, and geometry information indicating shape of object

S20

Calculate moving speed of object in virtual space based on first position information

S30

Calculate distance between object and listener based on first position information and second position information

S50a

Generate aerodynamic sound signal based on shape indicated by geometry information, moving speed, and distance

S511

Obtain aerodynamic sound data stored in storage

S512a

Generate aerodynamic sound signal such that frequency components are shifted toward higher frequencies as moving speed increases, loudness of aerodynamic sound increases as distance decreases, and loudness of aerodynamic sound increases as spatial volume of object increases

S60

Output aerodynamic sound signal

END

# FIG. 15

START

S10a

Obtain first position information indicating position of object, second position information indicating position of listener, and geometry information indicating shape of object

S20

Calculate moving speed of object in virtual space based on first position information

S30

Calculate distance between object and listener based on first position information and second position information

S35

Calculate amount of wind per unit time generated when object moves, based on moving speed and geometry information

S50b

Generate aerodynamic sound signal based on moving speed, distance, and amount of wind

S511

Obtain aerodynamic sound data stored in storage

S512b

Generate aerodynamic sound signal such that frequency components are shifted toward higher frequencies as moving speed increases, loudness of aerodynamic sound increases as distance decreases, and loudness of aerodynamic sound increases as amount of wind increases

S60

Output aerodynamic sound signal

END

# FIG. 16

START

S10a

Obtain first position information indicating position of object, second position information indicating position of listener, and geometry information indicating shape of object

S20

Calculate moving speed of object in virtual space based on first position information

S30

Calculate distance between object and listener based on first position information and second position information

S35

Calculate amount of wind per unit time generated when object moves, based on moving speed and geometry information

S35c

Calculate amount of wind based on surface area of object as viewed from moving direction of object indicated in geometry information, and moving speed

S50b

Generate aerodynamic sound signal based on moving speed, distance, and amount of wind

S60

Output aerodynamic sound signal

END

FIG. 17

700

# FIG. 18

Left-right direction
(second direction)

Up-down direction
(first direction)

800

802

801

Front-back direction
(third direction)

# FIG. 19

START

S10a

Obtain first position information indicating position of object, second position information indicating position of listener, and geometry information indicating shape of object

S20e

Calculate moving speed and moving direction of object in virtual space based on first position information

S30

Calculate distance between object and listener based on first position information and second position information

S35e

Calculate amount of wind per unit time generated when object moves, based on moving speed, moving direction, and geometry information

S50b

Generate aerodynamic sound signal based on moving speed, distance, and amount of wind

S60

Output aerodynamic sound signal

END

# FIG. 20

900

Renderer

901

Reverberation processor

902

Early reflection processor

903

Distance attenuation processor

904

Selector

120

Calculator

130

Generator

905

Binaural processor

## INTERNATIONAL SEARCH REPORT

| International application No. |
| --- |
| **PCT/JP2023/025118** |

**A. CLASSIFICATION OF SUBJECT MATTER**

*H04S 7/00*(2006.01)i; *H04R 3/00*(2006.01)i
FI:   H04S7/00 300; H04R3/00 310

According to International Patent Classification (IPC) or to both national classification and IPC

**B. FIELDS SEARCHED**

Minimum documentation searched (classification system followed by classification symbols)

H04S7/00; H04R3/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2020/255810 A1 (SONY CORP) 24 December 2020 (2020-12-24) entire text, all drawings | 1-17 |
| A | US 2020/0029164 A1 (QUALCOMM INCORPORATED) 23 January 2020 (2020-01-23) entire text, all drawings | 1-17 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 September 2023** | **10 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/025118**

| Patent document cited in search report | | | Publication date (day/month/year) | Patent family member(s) | | | Publication date (day/month/year) |
|---|---|---|---|---|---|---|---|
| WO | 2020/255810 | A1 | 24 December 2020 | US | 2022/0360931 | A1 | |
| | | | | entire text, all drawings | | | |
| | | | | EP | 3989605 | A1 | |
| | | | | CN | 113994716 | A | |
| | | | | KR | 10-2022-0023348 | A | |
| US | 2020/0029164 | A1 | 23 January 2020 | TW | 202029782 | A | |

Form PCT/ISA/210 (patent family annex) (January 2015)

**EP 4 557 773 A1**

**Patent documents cited in the description**

- JP H07312800 A

- JP 2021180938 A